(19) Europäisches Patentamt
European Patent Office
Office européen des brevets

(11) EP 1 605 000 A1

(12) EUROPEAN PATENT APPLICATION
published in accordance with Art. 158(3) EPC

(43) Date of publication:
**14.12.2005 Bulletin 2005/50**

(21) Application number: **04718754.7**

(22) Date of filing: **09.03.2004**

(51) Int Cl.[7]: **C08F 10/02**, C08F 4/606

(86) International application number:
**PCT/JP2004/003009**

(87) International publication number:
**WO 2004/081064 (23.09.2004 Gazette 2004/39)**

(84) Designated Contracting States:
**AT BE BG CH CY CZ DE DK EE ES FI FR GB GR HU IE IT LI LU MC NL PL PT RO SE SI SK TR**
Designated Extension States:
**AL LT LV MK**

(30) Priority: **10.03.2003 JP 2003063653**
**07.10.2003 JP 2003347748**

(71) Applicant: **Asahi Kasei Chemicals Corporation**
**Tokyo 100-8440 (JP)**

(72) Inventors:
- **MIYAMOTO, Koichi**
  **Kurashiki-shi, Okayama 710-0833 (JP)**
- **NOZAKI, Takashi**
  **Kibi-gun, Okayama 710-1306 (JP)**
- **FUJIWARA, Akio**
  **Okayama 710-0805 (JP)**

(74) Representative: **von Kreisler, Alek et al**
**Deichmannhaus am Dom,**
**Postfach 10 22 41**
**50462 Köln (DE)**

# (54) ULTRAHIGH-MOLECULAR ETHYLENE POLYMER

(57) The present invention relates to an ultrahigh molecular weight ethylene polymer which is either an ethylene homopolymer (A) or an ethylene copolymer (B), the ethylene copolymer (B) being obtained by copolymerizing

a) 99.9 to 75.0% by weight of ethylene and
b) 0.1 to 25.0 % by weight of a comonomer which is at least one olefin selected from the group consisting of α-olefins having 3 to 20 carbon atoms, cyclic olefins having 3 to 20 carbon atoms, compounds represented by the formula $CH_2$=CHR (in which R is an aryl group having 6 to 20 carbon atoms) and linear, branched or cyclic dienes having 4 to 20 carbon atoms, the ethylene polymer having i) a viscosity average molecular weight of 1 million or more ii) a molecular weight distribution (Mw/Mn) of more than 3 and iii) a Ti content of not more than 3 ppm and a Cl content of 5 ppm in the polymer.

EP 1 605 000 A1

## Description

TECHNICAL FIELD

The present invention relates to an ultrahigh molecular weight ethylene polymer (ethylene homopolymer or ethylene copolymer) having an ultrahigh molecular weight of 1 million or more and a molecular weight distribution of more than 3, and in which the amounts of Ti and Cl remaining in the polymer are small, and a method of producing such an ultrahigh molecular weight ethylene polymer.

BACKGROUND ART

Ultrahigh molecular weight polyolefin, in particular ultrahigh molecular weight polyethylene is excellent in impact resistance, abrasion resistance, sliding properties and chemical resistance compared to widely used polyethylene, usable for sliding components, and has thus been ranked as one kind of engineering plastic. Further, after being homogeneously mixed with a plasticizer such as paraffin oil, they are extruded into sheet, film or fiber, or in some cases drawn and then used for a separator for a lithium ion battery, a separator for a lead acid battery, or ultra high strength/high modulus fiber.

Ultrahigh molecular weight polyethylene obtained using a metallocene catalyst has as narrow a molecular weight distribution (Mw/Mn) as 3 or less, and so improvement in the impact resistance can be expected, but because the amount of low molecular weight components is small, it is generally difficult to thermally melt the polyethylene in the molding process, and non-melted portions are not completely fused, generating non-uniform molded articles. Thus, the problem is that such portions are physically weak, and despite those articles are originally a high impact resistance material, the properties cannot be fully utilized. In addition, such polyethylene is difficult to be uniformly dissolved in plasticizer and remains as undissolved portions, easily affecting product strength and film properties. Moreover, there has been a problem that due to increased intermolecular entanglement, it is difficult to exert necessary drawability when drawing is needed as in the case of forming fiber.

On the other hand, ultrahigh molecular weight polyethylene obtained using a Ziegler-Natta catalyst generally has a wide molecular weight distribution and contains a large amount of low molecular weight components, and therefore it exhibits excellent properties such as moldability, solubility in plasticizer and drawability based on intermolecular entanglement. However, ultrahigh molecular weight polyethylene obtained using a Ziegler-Natta catalyst contains great amounts of remaining Ti and Cl, and tends to suffer from thermal degradation when molded at high temperatures. Consequently, the molecular weight of the desired ultrahigh molecular weight component is decreased because molecular chains are broken, failing to exert original ultrahigh molecular weight properties.

Due to its small friction coefficient and excellent sliding property, ultrahigh molecular weight polyethylene is also used for ski soles. However, ultrahigh molecular weight polyethylene has high crystallinity, is white and opaque, and has poor transparency even if formed into thin sheet or film, impairing design properties of brand name or the like on ski sole. In such actual situation, materials having excellent transparency are in demand. To improve transparency, JP-B-05-86803 proposes an ultrahigh molecular weight polyethylene copolymer obtained from ethylene and another $\alpha$-olefin (comonomer). However, although polymerization temperatures need to be low when copolymerizing ethylene and $\alpha$-olefin in order to increase the molecular weight, lowering of polymerization temperature results in decreased efficiency in the industrial process. On the other hand, when copolymerization is carried out at a temperature of 70 to 100°C which is efficient in the industrial process, the molecular weight of the copolymer to be obtained is small. This led to a problem that abrasion resistance which is a characteristic of ultrahigh molecular weight polymer is decreased and friction coefficient is increased. In addition, when a usual Ziegler-Natta catalyst is used in such copolymerization of ethylene and $\alpha$-olefin, the comonomer $\alpha$-olefin cannot be uniformly or sufficiently introduced into the molecular chain of the copolymer, thus failing to achieve sufficient transparency when formed into boards.

JP-A-09-291112 discloses an ultrahigh molecular weight ethylene (co)polymer having an extremely narrow molecular weight distribution using a metallocene catalyst, but even in the case of copolymer, neither the density nor the melting point were sufficiently lowered, and improvement in the transparency was insufficient. JP-A-09-309926 discloses that an ethylene copolymer having a relatively wide molecular weight distribution is obtained using a metallocene catalyst, but there is no description of ultrahigh molecular weight ethylene copolymer having a molecular weight of 1 million or more. Further, although JP-A-11-106417 also describes an ultrahigh molecular weight ethylene polymer excellent in abrasion properties obtained using a metallocene catalyst, due to its high melting point in addition to the high molecular weight, plates to be obtained tend to be uneven when press molded, exhibiting poor moldability.

On the other hand, it is known that by using a metallocene catalyst, an ethylene polymer which has a narrow molecular weight distribution and a uniform distribution in the composition of constituent molecules can be obtained at high activity. However, the problem in the polymerization process using this kind of metallocene catalyst is that the polymerization rate is generally high at initial stages and a rapid polymerization reaction occurs between the catalyst

and ethylene upon contact, leaving heat removal behind and causing generation of local heat generation spot (heat spot) in the obtained polymer due to the heat of polymerization. This has led to a problem that part of the particles of the polymer reaches the melting point or higher and fused with each other to generate a bulk polymer. In a continuous process, generation of such bulk polymer results in clogging of polymer discharge tube of a polymerization reactor, making it impossible to remove the polymer, whereby continuous operation is disturbed.

To solve the above-described problems, JP-A-2000-198804 and JP-A-2001-302716 propose a method of producing an ethylene polymer characterized in that a metallocene catalyst is previously allowed to contact with hydrogen and then introduced into a polymerization reactor. However, because hydrogen which is a chain transfer agent is used, the molecular weight of the ethylene polymer to be obtained was limited.

DISCLOSURE OF THE INVENTION

An object of the present invention is to provide an ultrahigh molecular weight ethylene polymer with improved balance between moldability in the molding process and heat stability. In the present specification and the appended claims, by an "ethylene polymer" is meant an ethylene homopolymer or a copolymer of ethylene and a comonomer which is another olefin (i.e., ethylene copolymer).

Another object of the present invention is to provide an ultrahigh molecular weight ethylene polymer which has a reduced density, excellent transparency and flexibility due to introduction of a comonomer.

Still another object of the present invention is to provide, regarding an industrial process using metallocene as a catalyst, a method which can produce the above-mentioned ultrahigh molecular weight ethylene polymer steadily over a long period at efficient temperatures with little possibility of generation of scale.

The present inventors have conducted intensive studies to solve the above-mentioned problems and have found that an ultrahigh molecular weight ethylene polymer in which the molecular weight distribution of the ethylene copolymer is larger than 3 which is obtained using a usual metallocene catalyst, and in which the Ti remaining amount and the Cl remaining amount are smaller than those in the case of a Ziegler-Natta catalyst has an excellent balance between moldability in the molding process and heat stability. Further, as a result of detailed studies on an ultrahigh molecular weight ethylene copolymer to which a comonomer is introduced, it has been found that ultrahigh molecular weight can be maintained even if the amount of comonomer introduced is increased, and at the same time, the larger the molecular weight, the larger the amount of comonomer introduced, whereby an ultrahigh molecular weight ethylene copolymer in which the flexibility and the transparency are significantly improved can be obtained. It has also been found that the above-described ultrahigh molecular weight ethylene polymer can be produced at industrially efficient temperatures by combining a metallocene catalyst previously treated by a hydrogenating agent and a compound having hydrogenation ability, and the present invention has been reached.

Accordingly, the present invention is as follows:

[1] an ultrahigh molecular weight ethylene polymer which is either an ethylene homopolymer (A) or an ethylene copolymer (B), the ethylene copolymer (B) being obtained by copolymerizing

a) 99.9 to 75.0% by weight of ethylene and
b) 0.1 to 25.0 % by weight of a comonomer which is at least one olefin selected from the group consisting of an $\alpha$-olefin having 3 to 20 carbon atoms, a cyclic olefin having 3 to 20 carbon atoms, a compound represented by the formula $CH_2$=CHR (in which R is an aryl group having 6 to 20 carbon atoms) and a linear, branched or cyclic diene having 4 to 20 carbon atoms, the ethylene polymer having

i) a viscosity average molecular weight of 1 million or more,
ii) a molecular weight distribution (Mw/Mn) of more than 3, and
iii) a Ti content of 3 ppm or less and a Cl content of 5 ppm or less in the polymer.

[2] The ultrahigh molecular weight ethylene polymer according to the above 1, wherein the density $\rho$ (g/cc) and the crystallinity X (%) satisfy the relationship of the following formula (1):

$$100X < 630\rho - 530 \quad (1).$$

[3] The ultrahigh molecular weight ethylene polymer according to the above 1 or 2, which has a content of a terminal vinyl group of 0.02 or less (group/1000C).
[4] The ultrahigh molecular weight ethylene polymer according to any one of the above 1 to 3, wherein the density $\rho$ (g/cc) and the viscosity average molecular weight Mv satisfy the relationship of the following formula (2):

$$\rho \leq -9 \times 10^{-10} \times Mv + 0.937 \quad (2);$$

[5] The ultrahigh molecular weight ethylene polymer according to any one of the above 1 to 4, which has a density ρ of 0.850 to 0.925g/cc.
[6] The ultrahigh molecular weight ethylene polymer according to any one of the above 1 to 3 and 5, which has a HAZE of 70% or less which is an index of transparency measured according to ASTM D1003.
[7] The ultrahigh molecular weight ethylene polymer according to any one of the above 1 to 3, 5 and 6, wherein, regarding a distribution of amount of introducing a comonomer measured by GPC/FT-IR, the larger the molecular weight of the polymer, the larger the amount of introducing the comonomer.
[8] The ultrahigh molecular weight ethylene polymer according to the above 7, wherein, when a molecular weight distribution profile according to a GPC/FT-IR measurement is within the range defined by the following formula (3):

$$|\log(Mt)-\log(MC)| \leq 0.5 \quad (3)$$

(wherein Mt is a point indicated by a molecular weight in a molecular weight distribution profile where the profile shows the maximum intensity peak and Mc is an arbitrary point indicated by a molecular weight in the molecular weight distribution profile),

the slope of an approximate line of a comonomer concentration profile by a least squares method satisfies the range defined by the following formula (4):

$$0.0005 \leq \{C(Mc^1)-C(Mc^2)\}/(\log Mc^1-\log Mc^2) \leq 0.05 \quad (4)$$

(wherein $Mc^1$ and $Mc^2$ are two different arbitrary points Mc indicated by molecular weights satisfying the formula (3), and $C(Mc^1)$ and $C(Mc^2)$ are each a comonomer concentration corresponding to $Mc^1$ and $Mc^2$ in the approximate line).
[9] The ultrahigh molecular weight ethylene polymer according to any one of the above 1 to 3 and 5 to 8, wherein, in a CFC measurement, the total amount of a polymer fraction extracted at a temperature 10°C or more lower than a temperature marking the maximum extraction amount is 8% by weight or less based on the total extraction amount.
[10] The ultrahigh molecular weight ethylene polymer according to the above 9, wherein, in a CFC measurement, regarding extraction at an arbitrary temperature T (°C) which is within the range of a first temperature marking the maximum extraction amount to a second temperature 10°C higher than the first temperature,

when obtaining an approximate line by processing by a least squares method the relationship between the arbitrary temperature T (°C) and a point Mp(T) indicated by a molecular weight in the molecular weight distribution profile shown by a polymer fraction extracted at the arbitrary temperature T(°C), the point indicated by a molecular weight showing the maximum intensity peak,

the approximate line satisfying the following formula (5)

$$-1 \leq \{\log Mp(T^1)-\log Mp(T^2)\}/(T^1-T^2) \leq -0.005 \quad (5)$$

(in which $T^1$ and $T^2$ are two different arbitrary extraction temperatures T(°C) within the range between the first temperature and the second temperature, and $Mp(T^1)$ and $Mp(T^2)$ are each a molecular weight corresponding to $T^1$ and $T^2$ in the approximate line)

and as measured by CFC, the total amount of a polymer fraction extracted at a temperature 10°C or more lower than the first temperature is 8% by weight or less based on the total extraction amount of the polymer fraction extracted at all temperatures in the CFC measurement.
[11] A method of producing an ultrahigh molecular weight ethylene polymer according to any of the above 1 to 10, which comprises using, when polymerizing at least one olefin, a metallocene catalyst (C) previously brought into contact with a hydrogenating agent and a compound having hydrogenation ability (D).
[12] The method according to the above 11, wherein the hydrogenating agent is hydrogen and/or at least one $R_nSiH_{4-n}$ (wherein $0 \leq n \leq 1$ and R is a hydrocarbon group selected from the group consisting of an alkyl group having 1 to 4 carbon atoms, an aryl group having 6 to 12 carbon atoms, an alkylaryl group having 7 to 20 carbon atoms, an arylalkyl group having 7 to 20 carbon atoms and an alkenyl group having 2 to 20 carbon atoms.

[13] The method according to the above 11, wherein the metallocene catalyst (C) is formed by using at least one compound represented by the following formula (6):

$$L_jW_kMX_pX'_q \qquad (6)$$

(wherein L is each independently a η-bonding cyclic anion ligand selected from the group consisting of a cyclopentadienyl group, an indenyl group, a tetrahydroindenyl group, a fluorenyl group, a tetrahydrofluorenyl group and an octahydrofluorenyl group, the ligand optionally having 1 to 8 substituents, the substituents each independently being a substituent having 1 to 20 non-hydrogen atoms selected from the group consisting of a hydrocarbon group having 1 to 20 carbon atoms, a halogen atom, a halogen-substituted hydrocarbon group having 1 to 12 carbon atoms, an aminohydrocarbyl group having 1 to 12 carbon atoms, a hydrocarbyloxy group having 1 to 12 carbon atoms, a dihydrocarbylamino group having 1 to 12 carbon atoms, a hydrocarbylphosphino group having 1 to 12 carbon atoms, a silyl group, an aminosilyl group, a hydrocarbyloxysilyl group having 1 to 12 carbon atoms and a halosilyl group,
M is a transition metal selected from transition metals belonging to Group 4 in the periodic table having a formal oxidation number of +2, +3 or +4, which is $\eta^5$-bonded to at least one ligand L,
W is a divalent substituent having 1 to 50 non-hydrogen atoms, monovalently bonded to L and M each, thereby forming a metallacycle jointly with L and M,
X is each independently an anionic σ-bonding ligand having 1 to 60 non-hydrogen atoms selected from the group consisting of a monovalent anionic σ-bonding ligand, a divalent anionic σ-bonding ligand divalently bonded to M and a divalent anionic σ-bonding ligand monovalently bonded to L and M each,
X' is each independently a neutral Lewis base coordination compound having 1 to 40 non-hydrogen atoms,
j is 1 or 2, with the proviso that when j is 2, two ligands L are optionally bonded to each other via a divalent group having 1 to 20 non-hydrogen atoms, the divalent group being selected from the group consisting of a hydrocarbadiyl group having 1 to 20 carbon atoms, ahalohydrocarbadiyl group having 1 to 12 carbon atoms, a hydrocarbyleneoxy group having 1 to 12 carbon atoms, a hydrocarbyleneamino group having 1 to 12 carbon atoms, a silanediyl group, a halosilanediyl group and a silyleneamino group,
k is 0 or 1,
p is 0, 1 or 2, with the proviso that when X is a monovalent anionic σ-bonding ligand or a divalent anionic σ-bonding ligand bonded to L and M, p is an integer smaller by at least 1 than the formal oxidation number of M, and when X is a divalent anionic σ-bonding ligand bonded only to M, p is an integer smaller by at least (j+1) than the formal oxidation number of M, and
q is 0, 1 or 2).

[14] The method according to any one of the above 11 to 13, wherein the metallocene catalyst (C) is formed by using at least one compound represented by the following formula (7):

$$[L\text{-}H]^{d+}[M_mQ_p]^{d-} \qquad (7)$$

(wherein $[L\text{-}H]^{d+}$ represents proton-donating Broeusted acid in which L is a neutral Lewis base and d is an integer of 1 to 7; $[M_mQ_p]^{d-}$ is a compatible non-coordination anion in which M is a metal belonging to Group 5 to Group 15 in the periodic table or a metalloid, Q is each independently selected from the group consisting of hydride, halide, a dihydrocarbylamide group having 2 to 20 carbon atoms, a hydrocarbyloxy group having 1 to 30 carbon atoms, a hydrocarbon group having 1 to 30 carbon atoms and a substituted hydrocarbon group having 1 to 40 carbon atoms, with the proviso that, of Qs independently selected in the formula (7), the number of Q which is a halide is 0 or 1, m is an integer of 1 to 7, p is an integer of 2 to 14, d is as defined above and p-m = d).
[15] The method according to the above 11, wherein the compound having hydrogenation ability (D) is a titanocene compound alone, a half-titanocene compound alone, or a reaction mixture of at least one organometallic compound selected from the group consisting of organolithium, organomagnesium and organoaluminum and a titanocene compound or a half-titanocene compound.
[16] The method according to the above 15, wherein the titanocene compound or the half-titanocene compound is at least one compound represented by the following formula (8):

$$L_jW_kTiX_pX'_q \qquad (8)$$

(wherein L is each independently a η-bonding cyclic anion ligand selected from the group consisting of a cyclopentadienyl group, an indenyl group, a tetrahydroindenyl group, a fluorenyl group, a tetrahydrofluorenyl group and an octahydrofluorenyl group, the ligand optionally having 1 to 8 substituents, the substituents each independently being a substituent having 1 to 20 non-hydrogen atoms selected from the group consisting of a hydrocarbon group having 1 to 20 carbon atoms, a halogen atom, a halogen-substituted hydrocarbon group having 1 to 12 carbon atoms, an aminohydrocarbyl group having 1 to 12 carbon atoms, a hydrocarbyloxy group having 1 to 12 carbon atoms, a dihydrocarbylamino group having 1 to 12 carbon atoms, a hydrocarbylphosphino group having 1 to 12 carbon atoms, a silyl group, an aminosilyl group, a hydrocarbyloxysilyl group having 1 to 12 carbon atoms and a halosilyl group,
Ti is titanium having a formal oxidation number of +2, +3 or +4 and $\eta^5$-bonded to at least one ligand L
W is a divalent substituent having 1 to 50 non-hydrogen atoms, monovalently bonded to L and Ti each, thereby forming a metallacycle jointly with L and Ti,
X and X' are each independently a ligand selected from the group consisting of a monovalent ligand, a divalent ligand divalently bonded to Ti and a divalent ligand monovalently bonded to L and Ti each, which have 1 to 20 non-hydrogen atoms and are selected from the group consisting of a hydrogen atom, a hydrocarbon group having 1 to 20 carbon atoms, a halogen atom, a halogen-substituted hydrocarbon group having 1 to 12 carbon atoms, an aminohydrocarbyl group having 1 to 12 carbon atoms, a hydrocarbyloxy group having 1 to 12 carbon atoms, a dihydrocarbylamino group having 1 to 12 carbon atoms, a hydrocarbylphosphino group having 1 to 12 carbon atoms, a silyl group, an aminosilyl group, a hydrocarbyloxysilyl group having 1 to 12 carbon atoms and a halosilyl group,
j is 1 or 2, with the proviso that when j is 2, two ligands L are optionally bonded to each other via a divalent group having 1 to 20 non-hydrogen atoms, the divalent group being selected from the group consisting of a hydrocarbadiylgroup having 1 to 20 carbon atoms, ahalohydrocarbadiyl group having 1 to 12 carbon atoms, a hydrocarbyleneoxy group having 1 to 12 carbon atoms, a hydrocarbyleneamino group having 1 to 12 carbon atoms, a silanediyl group, a halosilanediyl group and a silyleneamino group,
k is 0 or 1,
p is 0, 1 or 2, with the proviso that when X is a monovalent ligand or a divalent ligand bonded to L and Ti, p is an integer smaller by at least 1 than the formal oxidation number of Ti, and when X is a divalent anionic σ-bonding ligand bonded only to Ti, p is an integer smaller by at least (j+1) than the formal oxidation number of Ti, and
q is 0, 1 or 2).

[17] A molded article obtained from an ultrahigh molecular weight ethylene polymer according to any one of the above 1 to 10.
[18] A fiber obtained from an ultrahigh molecular weight ethylene polymer according to any one of the above 1 to 10.

BEST MODE FOR CARRYING OUT THE INVENTION

The present invention is described in detail below. Specific embodiments of the ultrahigh molecular weight ethylene polymer are first described.
The ethylene homopolymer (A) in the present invention is a polymer obtained from a monomer containing ethylene as a main component, and the polymer may contain 0.1% by weight or less of a compound having an olefinic double bond, which is included in ethylene as impurities in an extremely trace amount.
The ethylene copolymer (B) in the present invention can be produced by copolymerizing ethylene with at least one olefin selected from the group consisting of an α-olefin having 3 to 20 carbon atoms, a cyclic olefin having 3 to 20 carbon atoms, a compound represented by the formula $CH_2$=CHR (in which R is an aryl group having 6 to 20 carbon atoms) and a linear, branched or cyclic diene having 4 to 20 carbon atoms.
α-olefin having 3 to 20 carbon atoms is, for example, selected from the group consisting of propylene, 1-butene, 1-pentene, 1-hexene, 4-methyl-1-pentene, 1-octene, 1-decene, 1-dodecene, 1-tetradecene, 1-hexadecene, 1-octadecene and 1-eicosene. Cyclic olefin having 3 to 20 carbon atoms is, for example, selected from the group consisting of cyclopentene, cyclohexene, cycloheptene, norbornene, 5-methyl-2-norbornene, tetracyclododecene and 2-methyl-1.4,5.8-dimethano-1,2,3,4,4a,5,8,8a-octahydronaphthalene. The compound represented by the formula $CH_2$=CHR (in which R is an aryl group having 6 to 20 carbon atoms) is, for example, styrene or vinylcyclohexane. Linear, branched or cyclic diene having 4 to 20 carbon atoms is, for example, selected from the group consisting of 1,3-butadiene, 1,4-pentadiene, 1,5-hexadiene, 1,4-hexadiene, 1,6-octadiene, 1,7-octadiene and cyclohexadiene.
By copolymerizing ethylene and the above-mentioned olefin (comonomer), physical properties of the ethylene copolymer (B) such as density, flexibility and transparency can be controlled.
The content of the comonomer in the copolymer is preferably in the range of 0.1 to 25.0% by weight, more

preferably in the range of 0.1 to 20.0% by weight. When the content of the comonomer is more than 25.0% by weight, density is significantly decreased, and since the copolymer is soluble in the solvent to be used or polymer bulk is generated in slurry polymerization, stable continuous operation cannot be achieved. Also, in gas phase polymerization, because polymer tends to be sticky and polymer bulk is generated, or because polymer adheres to the inner wall of the reactor in the form of scale, stable continuous operation cannot be achieved.

The ultrahigh molecular weight ethylene polymer of the present invention is produced by polymerizing ethylene or copolymerizing ethylene and a comonomer by suspension polymerization or gas phase polymerization. In suspension polymerization, an inert hydrocarbon may be used as a medium and olefin itself may be used as a medium.

Specific examples of such inert hydrocarbon medium include aliphatic hydrocarbons such as propane, butane, isobutane, pentane, isopentane, hexane, heptane, octane, decane, dodecane and kerosene; alycyclic hydrocarbons such as cyclopentane, cyclohexane and methylcyclopentane; aromatic hydrocarbons such as benzene, toluene and xylene; halogenated hydrocarbons such as ethyl chloride, chlorobenzene and dichloromethane, and mixtures thereof.

The polymerization temperature is in the range of generally preferably 60°C or more, more preferably 70°C or more, and preferably 150°C or less and more preferably 100°C or less. The polymerization pressure is usually under a condition of preferably normal pressure to 10 MPa, more preferably 0.2 to 5 MPa, further preferably 0.5 to 3 MPa. The polymerization reaction may be any of batch-type, semi-continuous or continuous.

It is also possible to conduct polymerization in two or more steps of different reaction conditions. Further, as described in DE 3127133, the molecular weight of the olefin polymer to be obtained can also be adjusted by allowing hydrogen to be present in the polymerization system or by changing the polymerization temperature. In the present invention, in addition to the components described above, other components useful for producing an ultrahigh molecular weight ethylene polymer can be included.

The viscosity average molecular weight (Mv) of the ultrahigh molecular weight ethylene polymer of the present invention can be determined by dissolving the ultrahigh molecular weight ethylene polymer in decalin at different concentrations and calculating from the intrinsic viscosity (η(d1/g)) obtained by extrapolating the solution viscosity measured at 135°C to 0 concentration according to the following formula.

$$Mv=5.34\times 10^{4}\eta^{1.49}$$

The viscosity average molecular weight of the ultrahigh molecular weight ethylene polymer of the present invention calculated from the above formula is usually 1 million or more, preferably 2 million or more. An ultrahigh molecular weight polyethylene having a viscosity average molecular weight of more than 1 million is excellent in abrasion resistance, low frictional properties and strength. Such polyethylene is therefore characteristically suitable for materials used for sliding members such as gear, bearing parts, artificial joint replacements, materials of ski sliding face, polishing agents, slip sheets of various magnetic tapes, flexible disk liners, bulletproof products, separators for batteries, filters, foamed articles, films, pipes, fibers, threads, fishing lines and cutting boards. Further, because the ultrahigh molecular weight ethylene polymer of the present invention is excellent in not only low frictional properties but also flexibility and transparency, it is particularly suitable for materials of ski and snowboard sliding faces (sole) in which design properties are recently required. In addition, because the strength (impact resistance, puncture resistance) is higher than that of usual ultrahigh molecular weight ethylene polymer, this polymer is suitably used for separators for batteries and filters.

The molecular weight distribution (Mw/Mn) of the ultrahigh molecular weight ethylene polymer of the present invention defined as the ratio of the weight average molecular weight (Mw) to the number average molecular weight (Mn) can be determined by a GPC measurement. In the case of a polymer with a usual molecular weight range, generally about 20 mg of polymer is dissolved in 15 mL of a solvent (trichlorobenzene) to carry out the measurement at 140°C. In the case of the ultrahigh molecular weight ethylene polymer of the present invention, however, because the solution viscosity is too high, about 2 mg of the polymer is dissolved in 15 ml of a solvent. The molecular weight distribution (Mw/Mn) of the ultrahigh molecular weight ethylene polymer of the present invention determined by this method is more than 3 and 10 or less, preferably 3.8 or more and 8 or less.

The amount of Ti and Cl remaining in the ultrahigh molecular weight ethylene polymer of the present invention may be quantified by fluorescent X-ray or ICP (ion coupling plasma). The remaining amounts are each 3 ppm or less, and 5 ppm or less, which are extremely smaller than those of ultrahigh molecular weight ethylene polymer obtained using a Ziegler-Natta catalyst. Preferably, the Ti remaining amount is 0.8 ppm or less and the Cl remaining amount is 3 ppm or less. Because the catalyst is highly active, catalytic residue is small, and because a catalyst containing no Cl is used, an ultrahigh molecular weight ethylene polymer containing substantially no Cl can be obtained. As described above, the ultrahigh molecular weight ethylene polymer of the present invention which contains substantially no catalytic residue or Cl has high heat stability, and the amount of antioxidant added may be decreased or in some cases, no antioxidant is needed.

The crystallinity (X(%)) of the ultrahigh molecular weight ethylene polymer of the present invention was determined by means of DSC. After keeping a sample at 50°C for 1 minute, the temperature was elevated to 180°C at a rate of 200°C/minute, and the sample was kept at 180°C for 5 minutes. The temperature was then lowered to 50°C at 10°C/minute. After keeping the sample at 50°C for 5 minutes, the temperature was elevated to 180°C at 10°C/minute. In a melting curve obtained upon these procedures, a baseline was drawn at 60°C to 145°C to determine the enthalpy of fusion (ΔH(J/g)). The crystallinity (X(%)) of the ultrahigh molecular weight ethylene polymer of the present invention can be determined from the enthalpy of fusion using the following formula.

$$X = \Delta H \times 100/293$$

Further, the crystallinity (X(%)) of the ultrahigh molecular weight ethylene polymer of the present invention determined as above and the density (ρ(g/cc)) measured in accordance with ASTM D1505 satisfy the following relationship.

$$100X < 630\rho - 530$$

Such a low crystallinity is a characteristic of the ultrahigh molecular weight ethylene polymer of the present invention, which is distinctive from characteristics of known ultrahigh molecular weight ethylene polymers. The ultrahigh molecular weight ethylene polymer of the present invention achieves low densities without introducing a comonomer, whereby flexible molded articles and fibers can be obtained. Further, because comonomers need not be introduced, decrease in polymerization activity is not caused and high activity can be maintained. On the other hand, the more the comonomer is introduced, the lower the crystallinity, whereby an ultrahigh molecular weight ethylene polymer excellent in transparency and flexibility can be obtained.

The content of the terminal vinyl group of the ultrahigh molecular weight ethylene polymer of the present invention can be determined by measuring infrared absorption spectrum (IR) of an ultrahigh molecular weight ethylene polymer film. The content is calculated from the absorbance (ΔA) at the 910 $cm^{-1}$ peak and the film thickness (t(mm)) according to the following formula.

$$\text{Content of vinyl group (group/1000C)} = 0.98 \times \Delta A/t$$

The content is 0.02 group or less, preferably 0.005 group or less per 1000 carbons. When the content of vinyl group is large, production of the ultrahigh molecular weight ethylene polymer is difficult. In other words, when a catalyst which is easy to produce such terminal vinyl group is used, the polymerization temperature must be lowered to prevent generation of terminal vinyl group, or sufficient ultrahigh molecular weight cannot be achieved. Further, the molecular weight must be controlled by a trace amount of hydrogen, which means that stable production is difficult from the aspect of the operation of production as well. Moreover, polymerization at low temperatures leads to reduced activity, which in turn lowers the production rate, affecting finishing and packaging processes.

The density (ρ(g/cc)) and the above-described viscosity average molecular weight (Mv) of the ultrahigh molecular weight ethylene polymer of the present invention satisfy the following relationship.

$$\rho \leq -9 \times 10^{-10} \times Mv + 0.937$$

The density (ρ(g/cc)) of the ultrahigh molecular weight ethylene polymer of the present invention is 0.850 or more and 0.925 or less, preferably 0.900 or more and 0.925 or less.

The HAZE which is an index of transparency of the ultrahigh molecular weight ethylene polymer of the present invention is 70% or less, preferably 65% or less as measured according to the method described in ASTM D1003.

As for the ultrahigh molecular weight ethylene polymer of the present invention, when the molecular weight showing the maximum peak position is referred to as Mt and an arbitrary molecular weight is referred to as Mc in a molecular weight distribution profile of the polymer as determined by GPC/FT-IR, and when Mt and Mc are within the range of

$$|\log(Mt)-\log(Mc)| \leq 0.5,$$

the slope of an approximate line of a concentration profile of comonomer in the polymer by a least squares method is within the range of:

$$0.0005 \leq \{C(Mc^1)-C(Mc^2)\}/(\log Mc^1-\log Mc^2) \leq 0.05$$

(wherein each of $Mc^1$ and $Mc^2$ represents an arbitrary molecular weight, and $C(Mc^1)$ and $C(Mc^2)$ represent comonomer concentrations at $Mc^1$ and $Mc^2$, respectively, in the approximate line according to a least squares method).

The above-described comonomer concentration profile can be determined by combining gel permeation chromatography (GPC) and Fourier transform infrared absorption spectrum (FT-IR). In the present invention, for GPC/FT-IR, 150CA LC/GPC equipment (made by Waters Corporation) was used, and as columns, one Shodex AT-807S (available from Showa Denko K.K.) and two TSK-gel GMH-H6 (available from Tosoh Corporation) were connected in series to be used. For FT-IR, 1760X (made by PERKIN-ELMER Inc.) was used, and 2 mg to 10 mg of a sample was dissolved in 15 ml of trichlorobenzene at 140°C, and 500 μl to 1000 μl of the sample solution was poured thereto to conduct the measurement.

In the present invention, the comonomer concentration is defined as a value obtained by dividing the number of comonomers contained in the ultrahigh molecular weight ethylene polymer per 1000 methylene groups by 1000 which is the number of methylene groups. That is, when the number of the comonomers per 1000 methylene groups is 5, the comonomer concentration is 0.005. Specifically, this comonomer concentration is determined from the ratio of the absorption intensity relevant to the comonomer to the absorption intensity of methylene group obtained from FT-IR. For example, when the comonomer is a linear α-olefin, the comonomer concentration is determined from the ratio of the absorption intensity of methyl group at 2960 $cm^{-1}$ to the absorption intensity of methylene group at 2925 $cm^{-1}$.

Generally, a comonomer concentration profile obtained by the above-mentioned GPC/FT-IR measurement is represented as a collection of points indicating comonomer concentrations. To increase the accuracy of the comonomer concentration profile measurement, it is preferable that the same sample is subjected to several measurements under the same conditions so as to obtain as many measured points of comonomer concentration as possible. In the present invention, by plotting an approximate line in the above-described range from the points thus measured, an approximate line of a comonomer concentration profile is obtained.

In the present invention, the slope of the approximate line of the comonomer concentration profile is defined by the following formula.

$$\{C(Mc^1)-C(Mc^2)\}/(\log Mc^1-\log Mc^2)$$

(wherein each of $Mc^1$ and $Mc^2$ represent an arbitrary molecular weight, and $C(Mc^1)$ and $C(Mc^2)$ represent comonomer concentrations at $Mc^1$ and $Mc^2$, respectively,in the approximate line).

The comonomer concentration profile represents variation in the comonomer concentration relative to molecular weight, and the slope of the approximate line of the profile represents the degree of variation in the comonomer concentration relative to variation in the molecular weight.

Conventionally, in the case of ethylene polymers obtained using a commonly used Ziegler-Natta catalyst, the slope of the approximate line was always negative. In other words, the higher the molecular weight, the lower the content of the comonomer. In addition, when a comonomer is introduced, it is difficult to increase the molecular weight, and substantially no such polymer of an ultrahigh molecular weight range existed. Most of the ethylene polymers using a metallocene catalyst of a usual molecular weight range which has been recently put into practice have a slope of the approximate line of the comonomer concentration profile of substantially 0, and even if fluctuation in the measurement is taken into account, the value was 0.0001 or lower.

On the contrary, the ultrahigh molecular weight ethylene polymer of the present invention has a slope of the approximate line of the comonomer concentration profile of 0.0005 or higher in the above-described range. This means that the ultrahigh molecular weight ethylene polymer of the present invention significantly reflects the tendency that higher molecular weight components contain more comonomers than lower molecular weight components, and the polymer has superior properties such as impact resistance and environmental stress crack resistance compared to conventional products.

More preferably, as for the ultrahigh molecular weight ethylene polymer of the present invention, within the range of

$$|\log(Mt)-\log(Mc)| \leq 0.5,$$

(wherein Mt and Mc are as defined above),
the slope of an approximate line of a concentration profile of comonomer in the polymer by a least squares method is within the range of

$$0.001 \leq \{C(Mc^1)-C(Mc^2)\}/(\log Mc^1-\log Mc^2) \leq 0.02$$

(wherein $C(Mc^1)$, $C(Mc^2)$, $Mc^1$ and $Mc^2$ are as defined above).

In the ultrahigh molecular weight ethylene polymer of the present invention, when cross fractionation chromatography (CFC) measurement is conducted, and within a temperature range from an extraction temperature yielding the maximum extraction amount (the first temperature) to a temperature 10°C higher than the first temperature (the second temperature) regarding the extraction temperatures of the ultrahigh molecular weight ethylene polymer, and when linearly approximating the following relationship by a least squares method; the relationship between an arbitrary extraction temperature T (°C) and a molecular weight Mp(T) which is a point indicated by a molecular weight in the molecular weight distribution profile of components (polymer fraction) extracted at the arbitrary temperature and which shows the maximum intensity peak in the CFC, the slope of the approximate line satisfies the following formula.

$$-1 \leq \{\log Mp(T^1)-\log Mp(T^2)\}/(T^1-T^2) \leq -0.005$$

(in which $T^1$ and $T^2$ are two different arbitrary extraction temperatures T(°C) within the range between the first temperature and the second temperature, and $Mp(T^1)$ and $Mp(T^2)$ are each a molecular weight corresponding to $T^1$ and $T^2$ in the approximate line).

In the above formula,

$$\{\log Mp(T^1)-\log Mp(T^2)\}/(T^1-T^2)$$

represents the slope of a line when the relationship between the extraction temperature T(°C) and the molecular weight Mp(T) at the maximum peak position in a molecular weight distribution of the polymer components extracted at the extraction temperature in CFC is linearly approximated by a least squares method.

CFC in the present invention was carried out using CFC T-150A (made by Mitsubishi Chemical Corporation). 2 to 10 mg of a sample is dissolved in 20 ml of dichlorobenzene at 140°C to carry out the measurement. 5 ml of the sample is poured into a TREF (Temperature Rising Elution Fractionation) column filled with glass beads, and cooled from 140°C at 1°C/min. The column is then heated to 140°C at 1°C/min to extract polymer components. The extracted polymer components are introduced into a GPC column (Shodex AD806MS (made by Showa Denko K.K.)) and detected by FT-IR (Nicolet Magna-IR Spectrometer 550).

Conventionally, in the case of ethylene polymers obtained using a commonly used Ziegler-Natta catalyst, the slope of the above approximate line defined in the present invention was generally substantially 0 or positive. Further, in most of the ethylene polymers using a metallocene catalyst which have been recently put into practice, the slope was substantially 0. On the contrary, as in the present invention, the fact that the slope of a line obtained by linear approximation by a least squares method of the relationship between the extraction temperature and the molecular weight of the maximum peak position is negative in a CFC measurement of the ultrahigh molecular weight ethylene polymer means that low extraction temperature components, i.e., low density components having a higher comonomer content have a higher molecular weight. The ultrahigh molecular weight ethylene polymer of the present invention has the above-described slope of smaller than -0.005, which is largely negative, and this implies that the tendency that high concentration copolymer containing components are high molecular weight is greater compared to conventional products.

In addition, the ultrahigh molecular weight ethylene polymer of the present invention has a negative slope over a wide and continuous extraction temperature range, which also means that the composition continuously varies over a wide range from a low comonomer concentration low molecular weight component, i.e., a high density low molecular weight component to a high comonomer concentration high molecular weight component, i.e., a low density high molecular weight component.

In the CFC measurement of the ultrahigh molecular weight ethylene polymer of the present invention, a preferred range of the slope of a line obtained by linear approximation by a least squares method of the relationship between the extraction temperature and the molecular weight at the maximum peak position is

$$-0.1 \le \{\log Mp(T^1)-\log Mp(T^2)\}/(T^1-T^2) \le -0.01$$

($Mp(T^1)$, $Mp(T^2)$, $T^1$ and $T^2$ are as defined above), and a more preferred range is

$$-0.08 \le \{\log Mp(T^1)-\log Mp(T^2)\}/(T^1-T^2) \le -0.02.$$

In the ultrahigh molecular weight ethylene polymer of the present invention, upon a CFC measurement, the total amount of components extracted at a temperature at least 10°C lower than the extraction temperature yielding the maximum extraction amount in extraction temperatures of the ultrahigh molecular weight ethylene polymer is 8% by weight or less. In the present invention, the amount of the above extraction components is determined from an integral curve of extraction components relative to extraction temperatures obtained by the above-described CFC measurement.

In conventional ethylene polymers obtained using a Ziegler-Natta catalyst, when a CFC measurement is carried out, components are extracted in a wide range of temperatures below the extraction temperature yielding the maximum extraction amount. This indicates that an ethylene polymer obtained using a Ziegler-Natta catalyst has a wide compositional distribution and contains low molecular weight wax components or extremely low density components which can be extracted at low temperatures. Although ethylene polymers obtained using a metallocene catalyst which have been recently practiced are generally known to have a narrow compositional distribution, low temperature extract components can also be detected in a large amount within a wide temperature range according to a CFC measurement.

The content of such low temperature extract components is extremely small in the ultrahigh molecular weight ethylene polymer of the present invention. More specifically, when a CFC measurement of the ultrahigh molecular weight ethylene polymer of the present invention is carried out, the total amount of components extracted at a temperature at least 10°C lower than the extraction temperature yielding the maximum extraction amount is 8% by weight or less, more preferably 5% by weight or less, further preferably 3.5% by weight or less. Because the content of such low temperature extract components is extremely small in the ultrahigh molecular weight ethylene polymer of the present invention as just described, physical properties of the polymer are not affected by the presence of wax components and low density components, and high quality is substantially achieved.

The method of producing the ultrahigh molecular weight ethylene polymer of the present invention will now be described.

The metallocene catalyst (C) used in the present invention is composed of at least two catalytic components of a) a transition metal compound containing a η-bonding cyclic anion ligand and b) an activating agent capable of reacting with the transition metal compound to form a complex having catalytic activity.

The transition metal compound containing a η-bonding cyclic anion ligand used in the present invention may be represented by, for example, the following formula (1).

$$L_jW_kMX_pX'_q \qquad (1)$$

(wherein L is each independently a η-bonding cyclic anion ligand selected from the group consisting of a cyclopentadienyl group, an indenyl group, a tetrahydroindenyl group, a fluorenyl group, a tetrahydrofluorenyl group and an octahydrofluorenyl group, the ligand optionally having 1 to 8 substituents, the substituents each independently being a substituent having 1 to 20 non-hydrogen atoms selected from the group consisting of a hydrocarbon group having 1 to 20 carbon atoms, a halogen atom, a halogen-substituted hydrocarbon group having 1 to 12 carbon atoms, an aminohydrocarbyl group having 1 to 12 carbon atoms, a hydrocarbyloxy group having 1 to 12 carbon atoms, a dihydrocarbylamino group having 1 to 12 carbon atoms, a hydrocarbylphosphino group having 1 to 12 carbon atoms, a silyl group, an aminosilyl group, a hydrocarbyloxysilyl group having 1 to 12 carbon atoms and a halosilyl group,

M is a transition metal selected from transition metals belonging to Group 4 in the periodic table having a formal oxidation number of +2, +3 or +4, which is $\eta^5$-bonded to at least one ligand L,

W is a divalent substituent having 1 to 50 non-hydrogen atoms, monovalently bonded to L and M each, thereby forming a metallacycle jointly with L and M,

X is each independently an anionic σ-bonding ligand having 1 to 60 non-hydrogen atoms selected from the group consisting of a monovalent anionic σ-bonding ligand, a divalent anionic σ-bonding ligand divalently bonded to M and a divalent anionic σ-bonding ligand monovalently bonded to L and M each,

X' is each independently a neutral Lewis base coordination compound having 1 to 40 non-hydrogen atoms,
j is 1 or 2, with the proviso that when j is 2, two ligands L are optionally bonded to each other via a divalent group having 1 to 20 non-hydrogen atoms, the divalent group being selected from the group consisting of ahydrocarbadiyl group having 1 to 20 carbon atoms, a halohydrocarbadiylgroup having 1 to 12 carbon atoms, a hydrocarbyleneoxy group having 1 to 12 carbon atoms, a hydrocarbyleneamino group having 1 to 12 carbon atoms, a silanediyl group, a halosilanediyl group and a silyleneamino group,
k is 0 or 1,
p is 0, 1 or 2, with the proviso that when X is a monovalent anionic σ-bonding ligand or a divalent anionic σ-bonding ligand bonded to L and M, p is an integer smaller by at least 1 than the formal oxidation number of M, and when X is a divalent anionic σ-bonding ligand bonded only to M, p is an integer smaller by at least (j+1) than the formal oxidation number of M, and
q is 0, 1 or 2).

Examples of ligand X in the compound of the above formula (1) include halide, a hydrocarbon group having 1 to 60 carbon atoms, a hydrocarbyloxy group having 1 to 60 carbon atoms, a hydrocarbylamide group having 1 to 60 carbon atoms, a hydrocarbylphoshide group having 1 to 60 carbon atoms, a hydrocarbylsulfide group having 1 to 60 carbon atoms, a silyl group and a group in which they are combined.
Examples of neutral Lewis base coordination compound X' in the compound of the above formula (1) include phosphine, ether, amine, olefin having 2 to 40 carbon atoms, diene having 1 to 40 carbon atoms and a divalent group derived from these compounds.
In the present invention, as a transition metal compound containing a η-bonding cyclic anion ligand, a transition metal compound represented by the above-described formula (1) (in which j=1) is preferred.
Preferred examples of compounds represented by the above-described formula (1) (in which j=1) include a compound represented by the following formula (3).

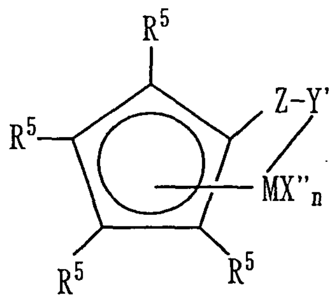

(3)

(in which M is a transition metal selected from the group consisting of titanium, zirconium and hafnium, having a formal oxidation number of +2, +3 or +4,

$R^5$ is each independently a substituent having 1 to 20 non-hydrogen atoms selected from the group consisting of a hydrogen atom, a hydrocarbon group having 1 to 8 carbon atoms, a silyl group, a germyl group, a cyano group, a halogen group and a group in which they are combined, with the proviso that when the substituent $R^5$ is a hydrocarbon group having 1 to 8 carbon atoms, a silyl group or a germyl group, two adjacent substituents $R^5$ are optionally bonded with each other to form a divalent group, whereby a ring is formed jointly with the bond of two carbon atoms of cyclopentadienyl rings each bonded to the two adjacent substituents $R^5$,
X" is each independently a substituent having 1 to 20 nom-hydrogen atoms selected from the group consisting of a halide, a hydrocarbon group having 1 to 20 carbon atoms, a hydrocarbyloxy group having 1 to 18 carbon atoms, a hydrocarbylamino group having 1 to 18 carbon atoms, a silyl group, a hydrocarbylamide group having 1 to 18 carbon atoms, a hydrocarbylphosphide group having 1 to 18 carbon atoms, a hydrocarbylsulfide group having 1 to 18 carbon atoms and a group in which they are combined, with the proviso that two substituents X" optionally jointly form neutral conjugate diene having 4 to 30 carbon atoms or a divalent group,
Y' is -O-, -S-, -NR*- or -PR*-, in which R* is a hydrogen atom, a hydrocarbon group having 1 to 12 carbon atoms, a hydrocarbyloxy group having 1 to 8 carbon atoms, a silyl group, a halogenated alkyl group having 1 to 8 carbon atoms, a halogenated aryl group having 6 to 20 carbon atoms, or a group in which they are combined,
Z represents $SiR^*_2$, $CR^*_2$, $SiR^*_2SiR^*_2$, $CR^*_2CR^*_2$, $CR^*=CR^*$, $CR^*_2SiR^*_2$ or $GeR^*_2$, in which R* is as defined above and n is 1, 2 or 3).

Specific examples of a transition metal compound containing a η-bonding cyclic anion ligand used in the present invention include the following compounds.

bis(methylcyclopentadienyl)zirconium dimethyl, bis(n-butylcyclopentadienyl)zirconium dimethyl, bis(indenyl)zirconium dimethyl, bis(1,3-dimethylcyclopentadienyl)zirconium dimethyl,
(pentamethylcyclopentadienyl) (cyclopentadienyl)zirconium dimethyl, bis(cyclopentadienyl)zirconium dimethyl, bis(pentamethylcyclopentadienyl)zirconium dimethyl,
bis(fluorenyl)zirconium dimethyl, ethylenebis(indenyl)zirconium dimethyl, ethylenebis(4,5,6,7-tetrahydro-1-indenyl)zirconium dimethyl, ethylenebis(4-methyl-1-indenyl)zirconium dimethyl, ethylenebis(5-methyl-1-indenyl)zirconium dimethyl,
ethylenebis(6-methyl-1-indenyl)zirconium dimethyl, ethylenebis(7-methyl-1-indenyl)zirconium dimethyl, ethylenebis(5-methoxy-1-indenyl)zirconium dimethyl, ethylenebis(2,3-dimethyl-1-indenyl)zirconium dimethyl, ethylenebis(4,7-dimethyl-1-indenyl)zirconium dimethyl, ethylenebis-(4,7-dimethoxy-1-, indenyl)zirconium dimethyl, methylenebis(cyclopentadienyl)zirconium dimethyl,
isopropylidene(cyclopentadienyl)zirconium dimethyl, isopropylidene(cyclopentadienyl-fluorenyl)zirconium dimethyl,
silylenebis(cyclopentadienyl)zirconium dimethyl, dimethylsilylene(cyclopentadienyl)zirconium dimethyl, [((N-t-butylamido)(tetramethyl-$\eta^5$-cyclopentadienyl)-1,2-ethanediyl]titanium dimethyl, [(N-t-butylamido)(tetramethyl-$\eta^5$-cyclopentadienyl)dimethyl silane]titanium dimethyl,
[(N-methylamido)(tetramethyl-$\eta^5$-cyclopentadienyl)dimethyl silane]titanium dimethyl, [(N-phenylamido)(tetramethyl-$\eta^5$-cyclopentadienyl) dimethyl silane]titanium dimethyl, [(N-benzylamido) (tetramethyl-$\eta^5$-cyclopentadienyl) dimethyl silane] titanium dimethyl, [(N-t-butylamido)($\eta^5$-cyclopentadienyl)-1,2-ethanediyl]titanium dimethyl,
[(N-t-butylamido)($\eta^5$-cyclopentadienyl)dimethyl silane]titanium dimethyl, [(N-methylamido)($\eta^5$-cyclopentadienyl)-1,2-ethanediyl]titanium dimethyl, [(N-methylamido)($\eta^5$-cyclopentadienyl)dimethyl silane] titanium dimethyl, [(N-t-butylamido)($\eta^5$-indenyl) dimethyl silane]titanium dimethyl, [(N-benzylamido)($\eta^5$-indenyl)dimethyl silane]titanium dimethyl,
dibromobistriphenylphosphine nickel, dichlorobistriphenylphosphine nickel, dibromodiacetonitrile nickel, dibromodibenzonitrile nickel, dibromo(1,2-bisdiphenylphosphinoethane) nickel, dibromo(1,3-bisdiphenylphosphinopropane) nickel, dibromo(1,1'-diphenylbisphosphinoferrocene) nickel, dimethylbisdiphenylphosphine nickel, dimethyl (1,2-bisdiphenylphosphinoethane) nickel, methyl(1,2-bisdiphenylphosphinoethane) nickel tetrafluoroborate, (2-diphenylphosphino-1-phenylethyleneoxy)phenylpyridine nickel, dichlorobistriphenylphosphine palladium, dichlorodibenzonitrile palladium, dichlorodiacetonitrile palladium, dichloro(1,2-bisdiphenylphosphinoethane) palladium, bistriphenylphosphine palladium bistetrafluoroborate and bis(2,2'-bipyridine)methyl iron tetrafluoroborate etherate.

Additional examples of transition metal compounds containing η-bonding cyclic anion ligand used in the present invention include compounds having a name obtained by replacing the portion "dimethyl" in the names of the zirconium and titanium compounds listed above (which is the last portion of the names of the compounds, i.e., appearing just behind "zirconium" or "titanium" corresponding to X" in the above formula (3)) with any of those listed below.
"dichloro", "dibromo", "diiodo", "diethyl", "dibutyl", "diphenyl", "dibenzyl", "2-(N,N-dimethylamino)benzyl", "2-butene-1,4-diyl", "s-trans-$\eta^4$-1,4-diphenyl-1,3-butadiene", "s-trans-$\eta^4$-3-methyl-1,3-pentadiene", "s-trans-$\eta^4$-1,4-dibenzyl-1,3-butadiene", "s-trans-$\eta^4$-2,4-hexadiene", "s-trans-$\eta^4$-1,3-pentadiene", "s-trans-$\eta^4$-1,4-ditolyl-1,3-butadiene", "s-trans-$\eta^4$-1,4-bis(trimethylsilyl)-1,3-butadiene", "s-cis-$\eta^4$-1,4-diphenyl-1,3-butadiene", "s-cis-$\eta^4$-3-methyl-1,3-pentadiene", "s-cis-$\eta^4$-1,4-dibenzyl-1,3-butadiene", "s-cis-$\eta^4$-2,4-hexadiene", "s-cis-$\eta^4$-1,3-pentadiene", "s-cis-$\eta^4$-1,4-ditolyl-1,3-butadiene" and "s-cis-$\eta^4$-1,4-bis(trimethylsilyl)-1,3-butadiene".
The transition metal compound containing a η-bonding cyclic anion ligand used in the present invention may be synthesized by a known method. These transition metal compounds may be used alone or in combination.
The activating agent capable of reacting with a transition metal compound to form a complex having catalytic activity (hereinafter may be simply referred to as "activating agent" in the present invention) will now be described.
Examples of such an activating agent in the present invention include compounds defined by the following formula (2).

$$[L\text{-}H]^{d+}[M_mQ_p]^{d-} \qquad (2)$$

(in which $[L\text{-}H]^{d+}$ represents a proton-donating Broeusted acid in which L is a neutral Lewis base and d is an integer of 1 to 7; $[M_mQ_p]^{d-}$ is a compatible non-coordination anion in which M is a metal belonging to Group 5 to Group 15 in

the periodic table or a metalloid, Q is each independently selected from the group consisting of hydride, halide, a dihydrocarbylamide group having 2 to 20 carbon atoms, a hydrocarbyloxy group having 1 to 30 carbon atoms, a hydrocarbon group having 1 to 30 carbon atoms and a substituted hydrocarbon group having 1 to 40 carbon atoms, with the proviso that, of Qs independently selected in the formula (2), the number of Q which is a halide is 0 or 1, m is an integer of 1 to 7, p is an integer of 2 to 14, d is as defined above and p-m = d).

Specific examples of non-coordination anion include tetrakisphenyl borate, tri(p-tolyl)(phenyl) borate, tris(pentafluorophenyl)(phenyl) borate, tris(2,4-dimethylphenyl)(phenyl) borate, tris(3,5-dimethylphenyl)(phenyl) borate, tris (3,5-di-trifluoromethylphenyl)(phenyl) borate, tris (pentafluorophenyl)(cyclohexyl) borate, tris (pentafluorophenyl) (naphthyl) borate, tetrakis (pentafluorophenyl) borate, triphenyl(hydroxyphenyl) borate, diphenyl-di(hydroxyphenyl) borate, triphenyl(2,4-dihydroxyphenyl) borate, tri(p-tolyl) (hydroxyphenyl) borate, tris(pentafluorophenyl) (hydroxyphenyl) borate, tris(2,4-dimethylphenyl) (hydroxyphenyl) borate, tris(3,5-dimethylphenyl) (hydroxyphenyl) borate, tris(3,5-di-trifluoromethylphenyl)(hydroxyphenyl) borate, tris(pentafluorophenyl)(2-hydroxyethyl) borate, tris(pentafluorophenyl) (4-hydroxybutyl) borate, tris(pentafluorophenyl)(4-hydroxy-cyclohexyl) borate, tris(pentafluorophenyl)(4-(4'-hydroxyphenyl)phenyl) borate and tris(pentafluorophenyl)(6-hydroxy-2-naphthyl) borate.

Examples of other preferred non-coordination anion include borates in which the hydroxyl group of the borates listed above is substituted by an NHR group. Here, R is preferably a methyl group, an ethyl group or a tert-butyl group.

Specific Examples of proton-donating Broeusted acid include trialkyl group substituted ammonium cation such as triethylammonium, tripropylammonium, tri(n-butyl)ammonium, trimethylammonium, tributylammonium and tri(n-octyl) ammonium. In addition, N-dialkylanilinium cations such as N,N-dimethylanilinium, N,N-diethylanilinium, N,N-2,4,6-pentamethylanilinium and N,N-dimethylbenzylanilinium are preferred.

Further, dialkylammonium cations such as di-(i-propyl)ammonium and dicyclohexylammonium are also preferred, and triarylphosphonium cations such as triphenylphosphonium, tri(methylphenyl)phosphonium and tri(dimethylphenyl)phosphonium, or dimethylsulfonium, diethylsulfonium and diphenylsulfonium are also preferred.

In addition, in the present invention, an organometallic oxy compound having a unit represented by the following formula (4) may be used as an activating agent.

$$\{M^2R_{n-2}\text{-}O\}_m \qquad (4)$$

(in which $M^2$ is a metal belonging to Group 13 to Group 15 in the periodic table or a metalloid, R is each independently a hydrocarbon group or a substituted hydrocarbon group having 1 to 12 carbon atoms, n is the valence of metal $M^2$, and m is an integer of 2 or more).

A preferred example of activating agent in the present invention is an organoaluminumoxy compound containing a unit represented by the following formula (5)

$$\{Al\,R\text{-}O\}_m \qquad (5)$$

(in which R is an alkyl group having 1 to 8 carbon atoms and m is an integer of 2 to 60).

A further preferred example of activating agent in the present invention is methylalumoxane containing a unit represented by the formula (6)

$$\{Al\,(CH_3)\,\text{-}O\}_m \qquad (6)$$

(in which m is an integer of 2 to 60).

In the present invention, the activating agent component may be used alone or in combination.

In the present invention, these catalytic components may be used as a supported catalyst by supporting them on a solid component. Examples of such solid component include porous polymer materials such as polyethylene, polypropylene and a styrenedivinylbenzene copolymer, and at least one inorganic solid material selected from inorganic solid materials including elements in Groups 2, 3, 4, 13 and 14 in the periodic table such as silica, alumina, magnesia, magnesium chloride, zirconia, titania, boron oxide, calcium oxide, zinc oxide, barium oxide, vanadium pentoxide, chromium oxide and thorium oxide, mixtures thereof and composite oxides thereof.

Examples of silica composite oxide include a composite oxide of silica and an element in Group 2 or Group 13 in the periodic table, such as silica magnesia and silica alumina. In addition to the above two catalytic components, an organoaluminum compound may be used as a catalytic component according to need. The organoaluminum compound that can be used in the present invention is a compound represented by the following formula (7).

$$AlR_nX_{3-n} \qquad (7)$$

(in which R is an alkyl group having 1 to 12 carbon atoms or an aryl group having 6 to 20 carbon atoms, X is halogen, hydrogen or an alkoxyl group, the alkyl group is linear, branched or cyclic, and n is an integer of 1 to 3.)

The organoaluminum compound in the present invention may be a mixture of compounds represented by the formula (7). R in the above formula is, for example, methyl group, ethyl group, butyl group, isobutyl group, hexyl group, octyl group, decyl group, phenyl group or tolyl group, and X is, for example, methoxy group, ethoxy group, butoxy group or chloro.

Specific examples of organoaluminum compounds used in the present invention include trimethylaluminum, triethylaluminum, tributylaluminum, triisobutylaluminum, trihexylaluminum, trioctylaluminum, tridecylaluminum, reaction products of such organoaluminum and alcohol such as methyl alcohol, ethyl alcohol, butyl alcohol, pentyl alcohol, hexyl alcohol, octyl alcohol, decyl alcohol, e.g., dimethylmethoxyaluminum, diethylethoxyaluminum and dibutylbutoxyaluminum.

The hydrogenating agent used in the present invention will now be described.

Examples of hydrogenating agents include hydrogen and $R_{r-n}(Mt)_{\alpha}H_n$ (in which Mt is an element belonging to Groups 1 to 3, 14 and 15 in the periodic table, R is a hydrocarbon group selected from the group consisting of an alkyl group having 1 to 4 carbon atoms, an aryl group having 6 to 12 carbon atoms, an alkylaryl group having 7 to 20 carbon atoms, an arylalkyl group having 7 to 20 carbon atoms and an alkenyl group having 2 to 20 carbon atoms, $n>0$, $r-n\geq0$, and r is the atomic valence of Mt).

Of these, preferred is hydrogen or a silane compound represented by $R_nSiH_{4-n}$ (in which $0\leq n\leq1$ and R is a hydrocarbon group selected from the group consisting of an alkyl group having 1 to 4 carbon atoms, an aryl group having 6 to 12 carbon atoms, an alkylaryl group having 7 to 20 carbon atoms, an arylalkyl group having 7 to 20 carbon atoms and an alkenyl group having 2 to 20 carbon atoms), and hydrogen is particularly preferred.

Specific examples of hydrogenating agents include hydrogen, sodium hydride, calcium hydride, lithium aluminum hydride, $SiH_4$, methylsilane, ethylsilane, n-butylsilane, octylsilane, octadecylsilane, phenylsilane, benzylsilane, dimethylsilane, diethylsilane, di-n-butylsilane, dioctylsilane, dioctadecylsilane, diphenylsilane, dibenzylsilane, ethenylsilane, 3-butenylsilane, 5-hexenylsilane, cyclohexenylsilane, 7-octenylsilane and 17-octadecenylsilane, and preferred are hydrogen, octylsilane and phenylsilane.

In the present invention, these hydrogenating agents may be used alone or in combination.

The metallocene catalyst (C) is first allowed to contact with a hydrogenating agent and then used for polymerization. The method of contacting the metallocene catalyst with a hydrogenating agent before introducing into a polymerization reactor include, for example, 1) a method in which a hydrogenating agent is included in a medium for transporting the catalyst and allowing the catalyst to be contacted with the hydrogenating agent during transporting the catalyst to a polymerization reactor, and 2) a method in which a hydrogenating agent is introduced at a stage before transporting a catalyst, e.g., into a catalyst storage tank, thereby allowing the catalyst to be contacted with the hydrogenating agent.

Referring to the above method 1), for example, a hydrogenating agent supply line is connected to a catalyst transport line provided for introducing a catalyst into a polymerization reactor, and by supplying a hydrogenating agent to the line, the hydrogenating agent can be included in the medium. Alternatively, a hydrogenating agent supply line is connected to a catalyst supply nozzle in a polymerization reactor provided for introducing a catalyst into the polymerization reactor, and by supplying a hydrogenating agent to the line, the hydrogenating agent can be included in the medium. Further, a hydrogenating agent may be previously included in a medium for transporting catalyst into a polymerization reactor, and a catalyst is transported to the polymerization reactor using the hydrogenating agent-containing catalyst transport medium.

The contact time in the above method 2) is not particularly limited, but is preferably within 10 minutes, more preferably within 5 minutes, further preferably within 1 minute, still further preferably within 30 seconds, and most preferably within 20 seconds.

In the present invention, the amount of the hydrogenating agent to be contacted with the metallocene catalyst is 0.5-fold mole or more and 50000-fold mole or less relative to the transition metal compound contained in the catalyst. When the amount of the hydrogenating agent is less than 0.5-fold mole, polymer bulk is generated and stable operation is difficult. When the amount of the hydrogenating agent is more than 50000-fold mole, polymerization activity and molecular weight may be decreased. The amount of the hydrogenating agent is preferably 1-fold mole or more and 30000-fold mole or less, more preferably 10-fold mole or more and 1000-fold mole or less.

The compound having hydrogenation ability (D) used in the present invention will now be described. The compound having hydrogenation ability means a compound which reacts with hydrogen and hydrogenates ethylene or $\alpha$-olefin in the system, and consequently reduces the hydrogen concentration in the polymerization reactor, and is

preferably a compound which does not decrease the activity of polymerization catalyst. Metallocene compounds and compounds containing platinum, palladium, palladium-chromium, nickel or ruthenium may be used. Of these, metallocene compounds having high hydrogenation activity are preferred, and in particular, titanocene compounds or half-titanocene compounds which can exhibit hydrogenation activity at about polymerization temperatures are preferred.

These titanocene compounds and half-titanocene compounds have hydrogenation ability in themselves, but when they are mixed/reacted with an organoinetallic compound such as organolithium, organomagnesium or organoaluminum, hydrogenation ability is preferably increased.

The above organometallic compound may be mixed/ reacted with the titanocene compound or the half-titanocene compound before feeding them into the polymerization reactor, or they may be separately fed to the reactor and then mixed/reacted in the polymerization reactor.

The titanocene compound or the half-titanocene compound used in the present invention may be represented by the following formula (8).

$$L_jV_kTiX_pX'_q \qquad (8)$$

(wherein L is each independently a η-bonding cyclic anion ligand selected from the group consisting of a cyclopentadienyl group, an indenyl group, a tetrahydroindenyl group, a fluorenyl group, a tetrahydrofluorenyl group and an octahydrofluorenyl group, the ligand optionally having 1 to 8 substituents, the substituents each independently being a substituent having 1 to 20 non-hydrogen atoms selected from the group consisting of a hydrocarbon group having 1 to 20 carbon atoms, a halogen atom, a halogen-substituted hydrocarbon group having 1 to 12 carbon atoms, an aminohydrocarbyl group having 1 to 12 carbon atoms, a hydrocarbyloxy group having 1 to 12 carbon atoms, a dihydrocarbylamino group having 1 to 12 carbon atoms, a hydrocarbylphosphino group having 1 to 12 carbon atoms, a silyl group, an aminosilyl group, a hydrocarbyloxysilyl group having 1 to 12 carbon atoms and a halosilyl group,

Ti is titanium having a formal oxidation number of +2, +3 or +4 and $\eta^5$-bonded to at least one ligand L,

W is a divalent substituent having 1 to 50 non-hydrogen atoms, monovalently bonded to L and Ti each, thereby forming a metallacycle jointly with L and Ti,

X and X' are each independently a ligand selected from the group consisting of a monovalent ligand, a divalent ligand divalently bonded to Ti and a divalent ligand monovalently bonded to L and Ti each, which have 1 to 20 non-hydrogen atoms and are selected from the group consisting of a hydrogen atom, a hydrocarbon group having 1 to 20 carbon atoms, a halogen atom, a halogen-substituted hydrocarbon group having 1 to 12 carbon atoms, an aminohydrocarbyl group having 1 to 12 carbon atoms, a hydrocarbyloxy group having 1 to 12 carbon atoms, a dihydrocarbylamino group having 1 to 12 carbon atoms, a hydrocarbylphosphino group having 1 to 12 carbon atoms, a silyl group, an aminosilyl group, a hydrocarbyloxysilyl group having 1 to 12 carbon atoms and a halosilyl group,

j is 1 or 2, with the proviso that when j is 2, two ligands L are optionally bonded to each other via a divalent group having 1 to 20 non-hydrogen atoms, the divalent group being selected from the group consisting of a hydrocarbadiyl group having 1 to 20 carbon atoms, a halohydrocarbadiylgroup having 1 to 12 carbon atoms, a hydrocarbyleneoxy group having 1 to 12 carbon atoms, a hydrocarbyleneamino group having 1 to 12 carbon atoms, a silanediyl group, a halosilanediyl group and a silyleneamino group,

k is 0 or 1,

p is 0, 1 or 2, with the proviso that when X is a monovalent ligand or a divalent ligand bonded to L and Ti, p is an integer smaller by at least 1 than the formal oxidation number of Ti, and when X is a divalent anionic σ-bonding ligand bonded only to Ti, p is an integer smaller by at least (j+1) than the formal oxidation number of Ti, and

q is 0, 1 or 2).

Specific examples of titanocene compounds used in the present invention in the case that the η-bonding cyclic anion ligand is a cyclopentadienyl group include the compounds described below.

bis(cyclopentadienyl)titanium dimethyl,
bis(cyclopentadienyl)titanium diethyl,
bis(cyclopentadienyl)titanium diisopropyl,
bis(cyclopentadienyl)titanium di-n-butyl,
bis(cyclopentadienyl)titanium di-sec-butyl,
bis(cyclopentadienyl)titanium dihexyl,
bis(cyclopentadienyl)titanium dioctyl,

bis(cyclopentadienyl)titanium dimethoxide,
bis(cyclopentadienyl)titanium diethoxide,
bis(cyclopentadienyl)titanium diisopropoxide,
bis(cyclopentadienyl)titanium dibutoxide,
bis(cyclopentadienyl)titanium diphenyl,
bis(cyclopentadienyl)titanium di-m-tolyl,
bis(cyclopentadienyl)titanium di-p-tolyl,
bis(cyclopentadienyl)titanium di-m,p-xylyl,
bis(cyclopentadienyl)titanium di-4-ethylphenyl,
bis(cyclopentadienyl)titanium di-4-hexylphenyl,
bis(cyclopentadienyl)titanium di-4-methoxyphenyl,
bis(cyclopentadienyl)titanium di-4-ethoxyphenyl,
bis(cyclopentadienyl)titanium diphenoxide,
bis(cyclopentadienyl)titanium difluoride,
bis(cyclopentadienyl)titanium dibromide,
bis(cyclopentadienyl)titanium dichloride,
bis(cyclopentadienyl)titanium dibromide,
bis(cyclopentadienyl)titanium diiodide,
bis(cyclopentadienyl)titanium chloride methyl,
bis(cyclopentadienyl)titanium chloride ethoxide,
bis(cyclopentadienyl)titanium chloride phenoxide,
bis(cyclopentadienyl)titanium dibenzyl,
bis(cyclopentadienyl)titanium di-dimethylamide,
bis(cyclopentadienyl)titanium di-diethylamide,
bis(cyclopentadienyl)titanium di-diisopropylamide,
bis(cyclopentadienyl)titanium di-di-sec-butylamide,
bis(cyclopentadienyl)titanium di-di-tert-butylamide and
bis(cyclopentadienyl)titanium di-ditrimethylsilylamide.

Additional examples of titanocene compounds used in the present invention include compounds having a name obtained by replacing the portion "cyclopentadienyl" of those listed above with any η-bonding cyclic anion ligand listed below.

"methylcyclopentadienyl", "n-butylcyclopentadienyl", "1,3-dimethylcyclopentadienyl", "pentamethylcyclopentadienyl", "tetramethylcyclopentadienyl", "trimethylsilylcyclopentadienyl", "1,3-bistrimethylsilylcyclopentadienyl", "indenyl", "4,5,6,7-tetrahydro-1-indenyl", "5-methyl-1-indenyl", "6-methyl-1-indenyl", "7-methyl-1-indenyl", "5-methoxy-1-indenyl", "2,3-dimethyl-1-indenyl", "4,7-dimethyl-1-indenyl", "4,7-dimethoxy-1-indenyl" and "fluorenyl".

Further, as for the two η-bonding cyclic anion ligands constituting the titanocene compound, any ligand described above may be combined. Specific examples of such optional combination include

(pentamethylcyclopentadienyl)(cyclopentadienyl)titanium dichloride, (fluorenyl)(cyclopentadienyl)titanium dichloride, (fluorenyl)(pentamethylcyclopentadienyl) titanium dichloride, (indenyl)(cyclopentadienyl) titanium dichloride, (indenyl) (pentamethylcyclopentadienyl)titanium dichloride, (indenyl)(fluorenyl)titanium dichloride, (tetrahydroindenyl)(cyclopentadienyl)titanium dichloride, (tetrahydroindenyl) (pentamethylcyclopentadienyl)titanium dichloride, (tetrahydroindenyl)(fluorenyl)titanium dichloride, (cyclopentadienyl)(1,3-bistrimethylsilylcyclopentadienyl)titanium dichloride, (pentamethylcyclopentadienyl) (1,3-bistrimethylsilylcyclopentadienyl)titanium dichloride, (fluorenyl)(1,3-bistrimethylsilylcyclopentadienyl)titanium dichloride, (indenyl)(1,3-bistrimethylsilylcyclopentadienyl) titanium dichloride and (tetrahydroindenyl) (1,3-bistrimethylsilylcyclopentadienyl)titanium dichloride.

Examples thereof also include compounds having a name obtained by replacing the portion "dichloride" of these compounds with any one listed below.

"dibromide", "diiodide", "methyl chloride", "methyl bromide", "dimethyl", "diethyl", "dibutyl", "diphenyl", "dibenzyl", "dimethoxy", "methoxy chloride", "bis-2-(N,N-dimethylamino)benzyl", "2-butene-1,4-diyl", "s-trans-$\eta^4$-1,4-diphenyl-1,3-butadiene", "s-trans-$\eta^4$-3-methyl-1,3-pentadiene", "s-trans-$\eta^4$-1,4-dibenzyl-1,3-butadiene", "s-trans-$\eta^4$-2,4-hexadiene", "s-trans-$\eta^4$-1,3-pentadiene", "s-trans-$\eta^4$-1,4-ditolyl-1,3-butadiene", "s-trans-$\eta^4$-1,4-bis(trimethylsilyl)-1,3-butadiene", "s-cis-$\eta^4$-1,4-diphenyl-1,3-butadiene", "s-cis-$\eta^4$-3-methyl-1,3-pentadiene", "s-cis-$\eta^4$-1,4-dibenzyl-1,3-butadiene", "s-cis-$\eta^4$-2,4-hexadiene", "s-cis-$\eta^4$-1,3-pentadiene", "s-cis-$\eta^4$-1,4-ditolyl-1,3-butadiene" and "s-cis-$\eta^4$-1,4-bis(trimethylsilyl)-1,3-butadiene".

These two η-bonding cyclic anion ligands may be bonded via a group listed below.

$-SiR^*_2-$, $-CR^*_2-$, $-SiR^*_2SiR^*_2-$, $-CR^*_2CR^*_2-$, $-CR^*=CR^*-$, $-CR^*_2SiR^*_2-$ or $-GeR^*_2-$, in which R* is a hydrogen atom, a hydrocarbon group having 1 to 12 carbon atoms, a hydrocarbyloxy group having 1 to 8 carbon atoms, a silyl group, a halogenated alkyl group having 1 to 8 carbon atoms, a halogenated aryl group having 6 to 20 carbon atoms, or a group in which they are combined.

Specific Examples of two bonded η-bonding cyclic anion ligands include

ethylenebis(cyclopentadienyl)titanium dichloride, ethylenebis(tetramethylcyclopentadienyl)titanium dichloride, ethylenebis(indenyl)titanium dichloride, ethylenebis(4,5,6,7-tetrahydro-1-indenyl)titanium dichloride, ethylenebis(4-methyl-1-indenyl)titanium dichloride, ethylenebis(5-methyl-1-indenyl)titanium dichloride, ethylenebis(6-methyl-1-indenyl)titanium dichloride, ethylenebis(7-methyl-1-indenyl)titanium dichloride, ethylenebis(5-methoxy-1-indenyl)titanium dichloride, ethylenebis(2,3-dimethyl-1-indenyl)titanium dichloride, ethylenebis(4,7-dimethyl-1-indenyl)titanium dichloride, ethylenebis(4,7-dimethoxy-1-indenyl)titanium dichloride, methylenebis (cyclopentadienyl)titanium dichloride, isopropylidenebis(cyclopentadienyl)titanium dichloride, isopropylidene(cyclopentadienyl)(fluorenyl)titanium dichloride, silylenebis(cyclopentadienyl)titanium dichloride, dimethylsilylenebis(cyclopentadienyl) titanium dichloride, dimethylsilylenebis (tetramethylcyclopentadienyl)titanium dichloride, dimethylsilylenebis(methylcyclopentadienyl)titanium dichloride, dimethylsilylenebis (trimethylsilylcyclopentadienyl)titanium dichloride, dimethylsilylene(cyclopentadienyl)(fluorenyl)titanium dichloride, dimethylsilylene(cyclopentadienyl) (indenyl)titanium dichloride, dimethylsilylene (tetramethylcyclopentadienyl)(fluorenyl)titanium dichloride, dimethylsilylene (tetramethylcyclopentadienyl)(indenyl) titanium dichloride, dimethylsilylene (tetramethylcyclopentadienyl)(cyclopentadienyl) titanium dichloride, dimethylsilylene(fluorenyl) (indenyl)titanium dichloride, dimethylsilylene (tetramethylcyclopentadienyl) (trimethylsilylcyclopentadienyl)titanium dichloride, dimethylsilylene(tetramethylcyclopentadienyl) (3,5-bistrimethylsilylcyclopentadienyl)titanium dichloride, dimethylsilylene(cyclopentadienyl) (trimethylsilylcyclopentadienyl)titanium dichloride, dimethylsilylene(tetramethylcyclopentadienyl)(3,5-bistrimethylsilylcyclopentadienyl)titanium dichloride, dimethylsilylene(fluorenyl) (trimethylsilylcyclopentadienyl)titanium dichloride, dimethylsilylene(fluorenyl)(3,5-bistrimethylsilylcyclopentadienyl)titanium dichloride,

dimethylsilylene(indenyl)
(trimethylsilylcyclopentadienyl)titanium dichloride and
dimethylsilylene(indenyl)
(3,5-bistrimethylsilylcyclopentadienyl)titanium dichloride.

Specific examples of half-titanocene compounds used in the present invention in the case that the η-bonding cyclic anion ligand is a cyclopentadienyl group include the compounds described below.

cyclopentadienyltitanium trimethyl,
cyclopentadienyltitanium triethyl,
cyclopentadienyltitanium triisopropyl,
cyclopentadienyltitanium tri-n-butyl,
cyclopentadienyltitanium tri-sec-butyl,
cyclopentadienyltitanium trimethoxide,
cyclopentadienyltitanium triethoxide,
cyclopentadienyltitanium triisopropoxide,
cyclopentadienyltitanium tributoxide,
cyclopentadienyltitanium triphenyl,
cyclopentadienyltitanium tri-m-tolyl,
cyclopentadienyltitanium tri-p-tolyl,
cyclopentadienyltitanium tri-m,p-xylyl,
cyclopentadienyltitanium tri-4-ethylphenyl,
cyclopentadienyltitanium tri-4-hexylphenyl,
cyclopentadienyltitanium tri-4-methoxyphenyl,
cyclopentadienyltitanium tri-4-ethoxyphenyl,
cyclopentadienyltitanium triphenoxide,
cyclopentadienyltitanium trifluoride,
cyclopentadienyltitanium tribromide,
cyclopentadienyltitanium trichloride,
cyclopentadienyltitanium tribromide,
cyclopentadienyltitanium triiodide,
cyclopentadienyltitanium methyl dichloride,
cyclopentadienyltitanium dimethyl chloride,
cyclopentadienyltitanium ethoxide dichloride,
cyclopentadienyltitanium diethoxide chloride,
cyclopentadienyltitanium phenoxide dichloride,
cyclopentadienyltitanium diphenoxide chloride,
cyclopentadienyltitanium tribenzyl,
cyclopentadienyltitanium tri-dimethylamide,
cyclopentadienyltitanium tri-diethylamide,
cyclopentadienyltitanium tri-diisopropylamide,
cyclopentadienyltitanium tri-di-sec-butylamide,
cyclopentadienyltitanium tri-di-tert-butylamide and
cyclopentadienyltitanium tri-ditrimethylsilylamide.

Additional examples of half-titanocene compounds used in the present invention include compounds having a name obtained by replacing the portion "cyclopentadienyl" of those listed above with any η-bonding cyclic anion ligand listed as in specific examples of titanocene compounds.

Examples thereof also include half-titanocene compounds listed below.

[(N-tert-butylamido) (tetramethylcyclopentadienyl)-1,2-ethanediyl]titanium dichloride, [(N-tert-butylamido) (tetramethylcyclopentadienyl)dimethyl silane]titanium dichloride, [(N-methylamido) (tetramethylcyclopentadienyl)dimethyl silane]titanium dichloride, [(N-phenylamido) (tetramethylcyclopentadienyl)dimethyl silane]titanium dichloride, [(N-benzylamido) (tetramethylcyclopentadienyl)dimethyl silane]titanium dichloride, [(N-tert-butylamido)(cyclopentadienyl)-1,2-ethanediyl]titanium dichloride, [(N-tert-butylamido) (cyclopentadienyl)dimethyl silane] titanium dichloride, [(N-methylamido) (cyclopentadienyl)-1,2-ethanediyl]titanium dichloride, (N-methylamido)(cyclopentadienyl) dimethyl silane] titanium dichloride, [(N-tert-butylamido)(indenyl) dimethyl silane]titanium dichloride and [(N-benzylamido)(indenyl)dimethyl silane]titanium dichloride.

Examples thereof also include compounds having a name obtained by replacing the portion "dichloride" of these half-titanocene compounds with any of those listed in the case of the titanocene compounds.
These titanocene compounds or the half-titanocene compounds may be used alone or in combination. Of these, preferred compounds having high hydrogenation activity are

bis(cyclopentadienyl)titanium dichloride,
bis(cyclopentadienyl)titanium di-m-tolyl and
bis(cyclopentadienyl)titanium di-p-tolyl.

Further, the above-described titanocene compound or the half-titanocene compound is preferably mixed/reacted with organolithium, organomagnesium or organoaluminum, because the hydrogenation activity can be further increased.
Organolithium to be mixed/reacted with the titanocene compound or the half-titanocene compound includes compounds represented by RLi (in which R is a hydrocarbon group selected from the group consisting of an alkyl group, alkoxy group or alkylamide group having 1 to 10 carbon atoms, an aryl group, allyloxy group or arylamide group having 6 to 12 carbon atoms, an alkylaryl group, alkylallyloxy group or alkylarylamide group having 7 to 20 carbon atoms, an arylalkyl group, arylalkoxy group or arylalkylamide group having 7 to 20 carbon atoms and an alkenyl group having 2 to 20 carbon atoms).
Specific Examples of such organolithium include monolithium compounds such as methyllithium, ethyllithium, isopropyllithium, n-butyllithium, sec-butyllithium, tert-butyllithium, methoxylithium, ethoxylithium, isopropoxylithium, butoxylithium, lithium dimethylamide, lithium diethylamide, lithium diisopropylamide, lithium dibutylamide, lithium diphenylamide, phenyllithium, m-tolyllithium, p-tolyllithium, xylyllithium, methoxyphenyllithium, phenoxylithium, 4-methylphenoxylithium, 2,6-diisopropylphenoxylithium, 2,4,6-triisopropylphenoxylithium and benzyllithium.
Examples thereof also include oligomers having terminal living activity to which a small amount of monomer is added using the above-described monolithium compound as an initiator, e.g., polybutadienyllithium, polyisoprenyllithium and polystyryllithium. Examples thereof also include compounds having two or more lithium atoms in a molecule, e.g., dilithium compounds which are reaction products of diisopropenylbenzene and sec-butyllithium and multi-lithium compounds which are reaction products of divinylbenzene, sec-butyllithium and a small amount of 1,3-butadiene. These organolithiums may be used alone or in combination. The amount thereof to be added to the titanocene compound or the half-titanocene compound is preferably in the range of 0.1 to 10, more preferably 0.2 to 5 in Li/Ti (molar ratio).
Organomagnesium to be mixed/reacted with the titanocene compound or the half-titanocene compound includes dialkyl magnesium and alkyl magnesium halides whose typical examples include Grignard reagents. Specific examples thereof include dimethylmagnesium, diethylmagnesium, dibutylmagnesium, ethylbutylmagnesium, dihexylmagnesium, methylmagnesium bromide, methylmagnesium chloride, ethylmagnesium bromide, ethylmagnesium chloride, butylmagnesium bromide, butylmagnesium chloride, hexylmagnesium bromide, cyclohexylmagnesium bromide, phenylmagnesium bromide, phenylmagnesium chloride, allylmagnesium bromide and allylmagnesium chloride.
These organomagnesiums may be used alone or in combination. The amount thereof to be added to the titanocene compound or the half-titanocene compound is preferably in the range of 0.1 to 10, more preferably 0.2 to 5 in Mg/Ti (molar ratio).
Organoaluminum to be mixed/reacted with the titanocene compound or the half-titanocene compound includes trialkylaluminum, dialkylaluminum chloride and alkylmagnesium dichloride. Specifically, trimethylaluminum, triethylaluminum, tributylaluminum, triisobutylaluminum, trihexylaluminum, trioctylaluminum, tridecylaluminum, dimethylaluminum chloride, diethylaluminum chloride, methylaluminum dichloride, ethylaluminum dichloride and diethylethoxyaluminum may be used.
These organoaluminums may be used alone or in combination. The amount thereof to be added to the titanocene compound or the half-titanocene compound is preferably in the range of 0.1 to 10, more preferably 0.2 to 5 in Al/Ti (molar ratio).
Of these combinations, a mixed reaction product of a titanocene compound and organoaluminum has particularly high hydrogenation ability and can be suitably used in the present invention. In that case, it is assumed that the titanocene compound and the organoaluminum constitute a metallacycle compound, forming a Tebbe complex. A Tebbe complex obtained by mixing titanocene dichloride as a titanocene compound and trimethylaluminum as organoaluminum at 1:2 (molar ratio) and allowing them to react also has high hydrogenation ability. Such Tebbe complex may be used after being isolated from the reaction mixture or in the form of a reaction mixture as is, but using the reaction mixture as is industrially advantageous because complicated steps of isolation can be omitted.
Because the reaction between a titanocene compound and organoaluminum is relatively slow, it is necessary to spend sufficient time. Specifically, a titanocene compound is dispersed or dissolved in an inert solvent, an organoaluminum compound is added thereto, and the mixture is then sufficiently stirred at a temperature of 0°C to 100°C to conduct the reaction. When the reaction temperature is too low, the reaction takes too long. On the other hand, when

the reaction temperature is too high, side reaction may occur and hydrogenation ability may be decreased. The reaction temperature is preferably 10°C to 50°C. In addition, since the progress of the reaction involves two stages, a period of one day or more preferably at room temperature is necessary.

To further increase the hydrogenation ability of these titanocene compounds or the half-titanocene compounds, alcohol, ether, amine, ketone or a phosphorus compound may be added as the second or the third component.

Examples of alcohols for increasing the hydrogenation ability of the titanocene compound or the half-titanocene compound include methyl alcohol, ethyl alcohol, isopropyl alcohol, butyl alcohol, phenol and glycols such as ethylene glycol.

Examples of ethers for increasing the hydrogenation ability of the titanocene compound or the half-titanocene compound include alkyl ethers such as dimethyl ether, diethyl ether, diisopropyl ether, dibutyl ether, tetrahydrofuran, diphenyl ether, ethylene glycol dimethyl ether, ethylene glycol diethyl ether and ethylene glycol dibutyl ether, and silyl ethers such as bistrimethylsilyl ether.

Examples of amines for increasing the hydrogenation ability of the titanocene compound or the half-titanocene compound include secondary amines such as dimethylamine, diethylamine, diisopropylamine, dibutylamine and diphenylamine, and tertiary amines such as trimethylamine, triethylamine, triisopropylamine, tributylamine, triphenylamine and N,N,N',N'-tetramethylethylenediamine.

Examples of ketones for increasing the hydrogenation ability of the titanocene compound or the half-titanocene compound include dimethyl ketone, diethyl ketone, methyl ethyl ketone, methyl phenyl ketone and ethyl phenyl ketone.

Examples of phosphorus compounds for increasing the hydrogenation ability of the titanocene compound or the half-titanocene compound include phosphorus compounds which can coordinate to titanocene, e.g., trimethylphosphine, triethylphosphine and triphenylphosphine.

These compounds for increasing the hydrogenation ability of the titanocene compound or the half-titanocene compound may be used alone or in combination. The amount thereof to be added to the titanocene compound or the half-titanocene compound is in the range of 0.01 to 10, preferably in the range of 0.02 to 5, more preferably in the range of 0.02 to 1 in a molar ratio relative to Ti.

As the compound having hydrogenation ability (D) of the present invention, in addition to the above-described titanocene compounds, compounds containing platinum, palladium, palladium-chromium, nickel or ruthenium may be used. The compound is preferably a Tebbe reagent or a Tebbe complex.

In the present invention, the compound having hydrogenation ability (D) may be previously contacted with metallocene catalyst (C) and then used for polymerization, or they may be separately introduced into the polymerization reactor. The amount to be used of each component and the ratio thereof are not particularly limited, but the molar ratio of the metal in the compound having hydrogenation ability (D) relative to the transition metal in the metallocene catalyst (C) is preferably 0.01 to 1000, more preferably 0.1 to 10. When the amount of the compound having hydrogenation ability (D) is small, molecular weight is not increased, and when the amount is too large, polymerization activity is decreased.

The ultrahigh molecular weight ethylene polymer of the present invention can be molded using the same molding techniques as those used for usual ultrahigh molecular weight polyethylene. For example, molded articles of the ultrahigh molecular weight ethylene polymer of the present invention can be obtained by various known molding methods such as a method comprising pouring ultrahigh molecular weight polyethylene powder into a mold and carrying out compression molding under heating for a long period, and extrusion molding using a ram extruder.

The molded article of the ultrahigh molecular weight ethylene polymer of the present invention also includes microporous films produced by mixing the ultrahigh molecular weight ethylene polymer with an appropriate solvent or plasticizer, extruding into a film and drawing the same, followed by extracting the solvent or plasticizer used. These films can be used for separators for batteries. In this case, a film in which an inorganic material such as silica is added may also be produced.

Further, powder of the ultrahigh molecular weight ethylene polymer of the present invention may be dissolved in or mixed with an appropriate solvent or a plasticizer to prepare a gel mixture, and using a known gel spinning technique, ultrahigh modulus high strength fiber can be obtained.

Examples 1 to 9 and Comparative Examples 1 to 4

The present invention will now be described in more detail with reference to Examples and Comparative Examples. The present invention is by no means limited by these Examples. The measurement methods used in Examples and Comparative Examples are as follows.

[Measurement of Mw/Mn]

Using 150-CA LC/GPC equipment (Waters Corporation), Shodex AT-807S (available from Showa Denko K. K.) and TSK-gel GMH-H16 (available from Tosoh Corporation) connected in series as columns, and using trichlorobenzene containing 10 ppm of IRGANOX 1010 (Ciba Specialty Chemicals) as a solvent, a measurement was carried out at 140°C. Commercially available monodisperse polystyrene was used as a reference material to prepare a calibration curve.

[Measurement of viscosity average molecular weight]

To 20 ml of decalin were added 2 mg of polymer and stirring was carried out at 150°C for 2 hours to dissolve the polymer. The falling time ($t_s$) between gauges of the solution were measured in a high temperature bath at 135°C using a Ubbelohde viscometer. As a blank test, the falling time ($t_b$) of decahydronaphthalene alone to which no polymer was added was measured. The specific viscosity ($\eta_{sp}$/C) of the polymer was plotted according to the following formula and the intrinsic viscosity (η) extrapolated to 0 concentration was calculated.

$$\eta_{sp}/C = (t_s/t_b-1)/0.1$$

From the intrinsic viscosity (η), the viscosity average molecular weight (Mv) was calculated according to the following formula.

$$Mv=5.34\times10^4\eta^{1.49}$$

[Measurement of density]

Measured in accordance with ASTM D1505. As a test piece, a piece cut from a press sheet was annealed at 120°C for 1 hour and cooled to room temperature over 1 hour was used.

[Measurement of HAZE]

A 0.7-mm thick press sheet was prepared and using a test piece left at 23°C±1°C for 24 hours, measurement was carried out according to the method described in ASTM D1003. <measuring machine (made by Murakami Color Research Laboratory, grade name HM-100), sample size: 50 mm(w)*10 mm(t)*50 mm(h), optical system: in accordance with ASTM D1003>

[Measurement of crystallinity]

Using a differential scanning calorimeter DSC7 (made by PERKIN-ELMER Inc.), a sample was kept at 50°C for 1 minute, and the temperature was then increased to 180°C at 200°C/minute, kept at 180°C for 5 minutes, and then lowered to 50°C at 10°C/minute. The sample was kept at 50°C for 5 minutes and the temperature was then increased to 180°C at 10°C/minute. In a melting curve obtained upon these procedures, a baseline was drawn at 60°C to 145°C to determine the enthalpy of fusion (J/g). This was divided by 293 (J/g) and multiplied by 100, and the obtained value was defined as crystallinity (%).

[Measurement of content of terminal vinyl group]

Powder of the ultrahigh molecular weight polyethylene was pressed at 180°C to prepare a film. The infrared absorption spectrum (IR) of this film was measured using FT-IR 5300A (made by JASCO Corporation). The vinyl group content was calculated from the absorbance (ΔA) at the 910 $cm^{-1}$ peak and the film thickness (t(mm)) according to the following formula.

$$\text{Content of vinyl group (group/1000C)} = 0.98\times\Delta A/t$$

[Measurement of remaining amounts of Ti and Cl]

A suitable amount of powder of the ultrahigh molecular weight ethylene polymer was taken and nitric acid was added thereto to decompose it. Pure water was added to the decomposed product to prepare a sample for measurement. A commercially available standard solution for atomic absorption spectrometry was diluted with an aqueous nitric acid solution to be used as a reference solution. An ICP measurement was carried out using JY138 (made by Rigaku Corporation).

[Calculation formula of calculated value 1]

Calculated value 1 was determined from the above-described viscosity average molecular weight Mv according to the following formula.

$$\text{Calculated value 1} = -9 \times 10^{-10} \times Mv + 0.937$$

[Calculation formula of calculated value 2]

Calculated value 2 was determined from the above-described density ρ(g/cc) according to the following formula.

$$\text{calculated value 2} = 630\rho - 530$$

Example 1

(Preparation of compound having hydrogenation ability (D))

A 3 wt% hexane suspension containing 30 mmol of titanocene dichloride available from Wako Pure Chemical Industries, Ltd. and 60 mmol of a 1M trimethylaluminum hexane solution were stirred at room temperature for 100 hours to prepare a Tebbe reagent.

(Polymerization of ethylene: Preparation of ethylene homopolymer (A))

Isobutane, ethylene, hydrogen, a metallocene catalyst and a Tebbe reagent were continuously fed to a vessel-type polymerization reactor equipped with a stirrer to produce polyethylene (ethylene homopolymer) at a rate of 10 kg/Hr. As hydrogen, hydrogen purified to 99.99 mole % or more by making contact with molecular sieves was used. As the metallocene catalyst, one in which a mixture of [(N-t-butylamide)(tetramethyl-$\eta^5$-cyclopentadienyl) dimethyl silane] titanium-1,3-pentadiene, bis (hydrogenated tallow alkyl)methylammonium-tris (pentafluorophenyl)(4-hydroxyphenyl) borate and triethylaluminum is supported on silica treated with triethylaluminum was used. Isobutane used as a solvent was fed at 32 L/Hr. The metallocene catalyst was fed together with 10 NL/Hr (NL standing for Normal Liter (volume converted under standard conditions)) of hydrogen with the isobutane solvent being a transport liquid so that the production rate was 10 kg/Hr. The Tebbe reagent was fed through a line different from that for the metallocene catalyst at 0.13 mmol/Hr. The polymerized slurry was continuously discharged so that the level of the polymerization reactor can be maintained constant, and the discharged slurry was transferred to the drying step. No bulk polymer was produced, nor was the slurry discharge tube clogged, and stable continuous operation was achieved. The catalytic activity was 5000 g PE/g catalyst. The average molecular weight of the obtained polyethylene determined from the intrinsic viscosity in decalin (135°C) was 9.2 million, the density was 0.9272 g/cc and the crystallinity was 46%. These and other measurement results of this Example are shown in Table 1.

Example 2

Polymerization was carried out in the same manner as in Example 1 except that the Tebbe reagent was fed at 0.013 mmol/Hr. No bulk polymer was produced, nor was the slurry discharge tube clogged either in this case, and stable continuous operation was achieved. The average molecular weight of the obtained polyethylene determined from the intrinsic viscosity in decalin (135°C) was 2.1 million, the density was 0.9300 g/cc and the crystallinity was 52%. These and other measurement results of this Example are shown in Table 1.

Example 3

Polymerization was carried out in the same manner as in Example 1 except that the Tebbe reagent was fed at 0.38 mmol/Hr. No bulk polymer was produced, nor was the slurry discharge tube clogged either in this case, and stable continuous operation was achieved. The average molecular weight of the obtained polyethylene determined from the intrinsic viscosity in decalin (135°C) was 11 million, the density was 0.9235 g/cc and the crystallinity was 42%. These and other measurement results of this Example are shown in Table 1.

Example 4

Polymerization was carried out in the same manner as in Example 1 except that the Tebbe reagent was fed at 0.038 mmol/Hr. No bulk polymer was produced, nor was the slurry discharge tube clogged either in this case, and stable continuous operation was achieved. The average molecular weight of the obtained polyethylene determined from the intrinsic viscosity in decalin (135°C) was 4.4 million, the density was 0.9275 g/cc and the crystallinity was 48%. These and other measurement results of this Example are shown in Table 1.

Comparative Example 1

Polymerization of ethylene was carried out in the same manner as in Example 1 except that a Ziegler catalyst (written as ZN catalyst in Table 1) prepared according to the method described in JP-B-52-36788 was used instead of the metallocene catalyst. The catalytic activity was 7000 g PE/g catalyst. The viscosity average molecular weight of the obtained polyethylene determined from the intrinsic viscosity in decalin (135°C) was 2 million, the density was 0.939 g/cc and the crystallinity was 64%. These and other measurement results of this Comparative Example are shown in Table 1.

Comparative Example 2

Polymerization of ethylene was carried out as in Example 1 using a metallocene catalyst prepared according to the method described in Example 1 of JP-A-09-291112 as a metallocene catalyst without feeding the Tebbe reagent. The obtained polyethylene was not of ultrahigh molecular weight, and the melt index value measured at 190°C at a load of 2.16 kg was 1.0 g/10 min. These and other measurement results of this Comparative Example are shown in Table 1.

Although an experiment for reducing the hydrogen feed amount from 10 NL/Hr was attempted in order to increase the molecular weight, the slurry discharge tube was clogged and the operation was then shut down.

[Table 1]

| Ex. | Ex. 1 | Ex. 2 | Ex. 3 | Ex. 4 | Com. Ex. 1 | Com. Ex. 2 |
|---|---|---|---|---|---|---|
| Catalyst used | Metallocene catalyst | | | | ZN Catalyst | Metallocene catalyst |
| Mw/Mn | 4.5 | 4.3 | 4.5 | 5.1 | 19 | 2.5 |
| Mv (× $10^4$) | 920 | 210 | 1100 | 440 | 200 | 190 |
| Density (g/cc) | 0.9272 | 0.9300 | 0.9235 | 0.9275 | 0.939 | 0.941 |
| Melting Point (°C) | 134.8 | 133.9 | 134.5 | 134.3 | 137.2 | 134.0 |
| Crystallinity (%) | 46 | 52 | 42 | 48 | 64 | 64 |
| Content of terminal vinyl group (group/1000C) | 0 | <0.005 | 0 | 0 | 0.032 | <0.005 |
| Ti remaining amount (ppm) | 0.5 | 0.5 | 0.6 | 1.2 | 1 | 1 |
| Cl remaining amount (ppm) | 2 | 3 | 3 | 2 | 17 | 5 |
| Calculated value 1 | 0.9287 | 0.9351 | 0.9271 | 0.9333 | 0.9352 | 0.9354 |
| Calculated value 2 | 54.1 | 55.9 | 51.8 | 55.4 | 56.5 | 57.5 |

Example 5

(Copolymerization of ethylene/hexene-1: Preparation of ethylene copolymer (B))

Isobutane, ethylene, hexene-1, hydrogen, a metallocene catalyst and a Tebbe reagent were continuously fed to a vessel-type polymerization reactor equipped with a stirrer to produce an ultrahigh molecular weight ethylene copolymer at a rate of 10 kg/Hr. As hydrogen, hydrogen purified to 99.99 mole % or more by making contact with molecular sieves was used. As the metallocene catalyst, one in which a mixture of [(N-t-butylamide) (tetramethyl-$\eta^5$-cyclopentadienyl)dimethyl silane]titanium-1,3-pentadiene, bis(hydrogenated tallow alkyl) methylammonium-tris(pentafluorophenyl)(4-hydroxyphenyl) borate and triethylaluminum is supported on silica treated with triethylaluminum was used. Isobutane used as a solvent was fed at 30 L/Hr. The metallocene catalyst was fed together with 10 NL/Hr of hydrogen with the isobutane solvent being a transport liquid so that the production rate was 10 kg/Hr. The Tebbe reagent was fed through a line different from that for the metallocene catalyst at 45 μmol/Hr. As hexene-1, hexene-1 purified by making contact with molecular sieves was fed at 0.35 L/Hr. The polymerized slurry was continuously discharged so that the level of the polymerization reactor can be maintained constant, and the discharged slurry was transferred to the drying step. No bulk polymer was produced, nor was the slurry discharge tube clogged, and stable continuous operation was achieved. The catalytic activity was 4000 g PE/g catalyst. The average molecular weight of the obtained polyethylene determined from the intrinsic viscosity in decalin (135°C) was 4.8 million, the density was 0.919 g/cc and the crystallinity was 37%. The HAZE which is an index of transparency was 42%. These and other measurement results of this Example are shown in Table 2.

Example 6

Polymerization was carried out in the same manner as in Example 5 except that the Tebbe reagent was fed at 75 μmol/Hr. The average molecular weight of the obtained polyethylene determined from the intrinsic viscosity in decalin (135°C) was 6.8 million, the density was 0.917 g/cc and the crystallinity was 37%. The HAZE which is an index of transparency was 41%. These and other measurement results of this Example are shown in Table 2.

Example 7

Polymerization was carried out in the same manner as in Example 5 except that hexene-1 was fed at 1.10 L/hr and the Tebbe reagent was fed at 100 μmol/Hr. The average molecular weight of the obtained polyethylene determined from the intrinsic viscosity in decalin (135°C) was 6.2 million, the density was 0.905 g/cc and the crystallinity was 17%. The HAZE which is an index of transparency was 20%. These and other measurement results of this Example are shown in Table 2.

Example 8

Polymerization was carried out in the same manner as in Example 5 except that hexene-1 was fed at 1.80 L/hr and the Tebbe reagent was fed at 150 μmol/Hr. The average molecular weight of the obtained polyethylene determined from the intrinsic viscosity in decalin (135°C) was 4.8 million, the density was 0.885 g/cc and the crystallinity was 8%. The HAZE which is an index of transparency was 15%. These and other measurement results of this Example are shown in Table 2.

Example 9

(Copolymerization of ethylene/butene-1: preparation of ethylene copolymer (B))

Polymerization was carried out in the same manner as in Example 5 except that butene-1 was used instead of hexene-1, butene-1 being fed at 1.00 L/hr, and the Tebbe reagent was fed at 45 μmol/Hr. The average molecular weight of the obtained polyethylene determined from the intrinsic viscosity in decalin (135°C) was 5.1 million, the density was 0.916 g/cc and the crystallinity was 35%. The HAZE which is an index of transparency was 32%. These and other measurement results of this Example are shown in Table 2.

Comparative Example 3

Polymerization of ethylene was carried out in the same manner as in Example 5 except that a Ziegler catalyst (written as ZN catalyst in Table 2) prepared according to the method described in JP-B-52-36788 was used instead of

the metallocene catalyst and the Tebbe catalyst was not used. The catalytic activity was 7000 g PE/g catalyst. The average molecular weight of the obtained polyethylene determined from the intrinsic viscosity in decalin (135°C) was 3 million, and the density was 0.930 g/cc, which was higher than that of Example 5. The crystallinity was 45%, and the HAZE which is an index of transparency was 56%, which was poorer than that of Example 5. These and other measurement results of this Comparative Example are shown in Table 2.

Comparative Example 4

Polymerization of ethylene was carried out in the same manner as in Example 5 except that the Tebbe catalyst was not used. The catalytic activity was 4000 g PE/g catalyst. The average molecular weight of the obtained polyethylene determined from the intrinsic viscosity in decalin (135°C) was 150,000, which was extremely lower than that of Example 5, and the density was 0.946 g/$cm^3$, which was higher than that of Example 5. The crystallinity was 40%, and the HAZE which is an index of transparency was 45%. These and other measurement results of this Comparative Example are shown in Table 2.

[Table 2]

| | Ex. 5 | Ex. 6 | Ex. 7 | Ex. 8 | Ex. 9 | Com. Ex. 3 | Com. Ex. 4 |
|---|---|---|---|---|---|---|---|
| Catalyst used | Metallocene catalyst | | | | | ZN catalyst | Metallocene catalyst |
| Tebbe reagent (μmol/Hr) | 45 | 75 | 100 | 150 | 45 | 0 | 0 |
| Kind of comonomer | 1-hexene | | | | 1-butene | 1-hexene | |
| Comonomer feed amount(L/hr) | 0.35 | 0.35 | 1.10 | 1.80 | 1.00 | 0.35 | 0.35 |
| Catalyst activity (g/gs) | 4,000 | 4,000 | 6,000 | 8,000 | 6,000 | 7,000 | 5,000 |
| Mw/Mn (-) | 4.5 | 4.3 | 4.8 | 5.1 | 4.5 | 18.5 | 3.5 |
| Molecular weight (× $10^4$) | 480 | 680 | 620 | 480 | 510 | 300 | 15 |
| Density (g/cc) | 0.919 | 0.917 | 0.905 | 0.885 | 0.916 | 0.930 | 0.946 |
| Crystallinity (%) | 37 | 37 | 17 | 8 | 32 | 45 | 40 |
| HAZE (%) | 42 | 41 | 20 | 15 | 40 | 56 | 45 |
| Content of terminal vinyl group (group/1000C) | 0 | 0 | 0 | 0 | 0 | 0.04 | 0.005> |
| Ti remaining amount (ppm) | 0.5 | 0.5 | 0.3 | 0.2 | 0.3 | 3 | 0.5 |
| Cl remaining amount (ppm) | 1> | 1> | 1> | 1> | 1> | 20 | 1> |
| Calculated value 2(-) | 49.0 | 47.7 | 40.2 | 27.6 | 47.0 | 55.9 | 66.0 |

INDUSTRIAL APPLICABILITY

The ultrahigh molecular weight ethylene polymer of the present invention has a molecular weight distribution of more than 3, the amounts of Ti and Cl remaining in the polymer are small, and the polymer is excellent in the balance of abrasion properties such as abrasion resistance and low frictional properties, mechanical properties such as strength, moldability and heat stability in the molding process. With such characteristics, the polymer can be suitably used in the fields including sliding members such as gear, bearing parts, artificial joint replacements, materials of ski sliding face, polishing agents, slip sheets of various magnetic tapes, flexible disk liners, bulletproof products, separators for batteries, various filters, foamed articles, films, pipes, fibers, threads, fishing lines and cutting boards. Further, when compared to conventional products, the density and the crystallinity of the ultrahigh molecular weight ethylene polymer of the present invention can be reduced with maintaining the ultrahigh molecular weight, and the polymer is thus superior in transparency and flexibility. Accordingly, the polymer is particularly useful as a material of ski sliding face. In addition, according to the production method of the present invention, the above-described ultrahigh molecular weight ethylene polymer can be steadily produced over a long period on a commercial scale.

## Claims

1. An ultrahigh molecular weight ethylene polymer which is either an ethylene homopolymer (A) or an ethylene copolymer (B), the ethylene copolymer (B) being obtained by copolymerizing

   a) 99.9 to 75.0% by weight of ethylene and
   b) 0.1 to 25.0 % by weight of a comonomer which is at least one olefin selected from the group consisting of an $\alpha$-olefin having 3 to 20 carbon atoms, a cyclic olefin having 3 to 20 carbon atoms, a compound represented by the formula $CH_2$=CHR (in which R is an aryl group having 6 to 20 carbon atoms) and a linear, branched or cyclic diene having 4 to 20 carbon atoms,

   the ethylene polymer having

   i) a viscosity average molecular weight of 1 million or more,
   ii) a molecular weight distribution (Mw/Mn) of more than 3, and
   iii) a Ti content of 3 ppm or less and a Cl content of 5 ppm or less in the polymer.

2. The ultrahigh molecular weight ethylene polymer according to claim 1, wherein a density $\rho$ (g/cc) and a crystallinity X (%) satisfy the relationship of the following formula (1):

$$100X < 630\rho - 530 \quad (1)$$

3. The ultrahigh molecular weight ethylene polymer according to claim 1 or 2, which has a content of a terminal vinyl group of 0.02 (group/1000C) or less.

4. The ultrahigh molecular weight ethylene polymer according to any one of claims 1 to 3, wherein a density $\rho$ (g/cc) and a viscosity average molecular weight Mv satisfy the relationship of the following formula (2):

$$\rho \leq -9 \times 10^{-10} \times Mv + 0.937 \quad (2)$$

5. The ultrahigh molecular weight ethylene polymer according to any one of claims 1 to 4, which has a density $\rho$ of 0.850 to 0.925 g/cc.

6. The ultrahigh molecular weight ethylene polymer according to any one of claims 1 to 3 and 5, which has a HAZE of 70% or less which is an index of transparency measured according to ASTM D1003.

7. The ultrahigh molecular weight ethylene polymer according to any one of claims 1 to 3, 5 and 6, wherein, regarding a distribution of amount of introducing a comonomer measured by GPC/FT-IR, the larger the molecular weight of the polymer, the larger the amount of introducing the comonomer.

**8.** The ultrahigh molecular weight ethylene polymer according to claim 7, wherein, when a molecular weight distribution profile according to a GPC/FT-IR measurement is within the range defined by the following formula (3):

$$|\log(Mt)-\log(Mc)| \leq 0.5 \quad (3)$$

(wherein Mt is a point indicated by a molecular weight in the molecular weight distribution profile where the profile shows the maximum intensity peak and Mc is an arbitrary point indicated by a molecular weight in the molecular weight distribution profile),

the slope of an approximate line of a comonomer concentration profile by a least squares method satisfies the range defined by the following formula (4):

$$0.0005 \leq \{C(Mc^1)-C(Mc^2)\}/(\log Mc^1-\log Mc^2) \leq 0.05 \quad (4)$$

(wherein $Mc^1$ and $Mc^2$ are two different arbitrary points Mc indicated by molecular weights satisfying the formula (3), and $C(Mc^1)$ and $C(Mc^2)$ are each a comonomer concentration corresponding to $Mc^1$ and $Mc^2$ in the approximate line).

**9.** The ultrahigh molecular weight ethylene polymer according to any one of claims 1 to 3 and 5 to 8, wherein, in a CFC measurement, the total amount of a polymer fraction extracted at a temperature 10°C or more lower than a temperature marking the maximum extraction amount is 8% by weight or less based on the total extraction amount.

**10.** The ultrahigh molecular weight ethylene polymer according to claim 9, wherein, in a CFC measurement, regarding extraction at an arbitrary temperature T (°C) which is within the range of a first temperature marking the maximum extraction amount to a second temperature 10°C higher than the first temperature,

when obtaining an approximate line by processing by a least squares method the relationship between the arbitrary temperature T (°C) and a point Mp(T) indicated by a molecular weight in the molecular weight distribution profile shown by a polymer fraction extracted at the arbitrary temperature T(°C), the point indicated by a molecular weight showing the maximum intensity peak,

the approximate line satisfying the following formula (5):

$$-1 \leq \{\log Mp(T^1)-\log Mp(T^2)\}/(T^1-T^2) \leq -0.005 \quad (5)$$

(in which $T^1$ and $T^2$ are two different arbitrary extraction temperatures T(°C) within the range between the first temperature and the second temperature, and $Mp(T^1)$ and $Mp(T^2)$ are each a molecular weight corresponding to $T^1$ and $T^2$ in the approximate line)

and as measured by CFC, the total amount of a polymer fraction extracted at a temperature 10°C or more lower than the first temperature is 8% by weight or less based on the total extraction amount of the polymer fraction extracted at all temperatures in the CFC measurement.

**11.** A method of producing an ultrahigh molecular weight ethylene polymer according to any one of claims 1 to 10, which comprises using, when polymerizing at least one olefin, a metallocene catalyst (C) previously brought into contact with a hydrogenating agent and a compound having hydrogenation ability (D).

**12.** The method according to claim 11, wherein the hydrogenating agent is hydrogen and/or at least one $R_nSiH_{4-n}$ (wherein $0 \leq n \leq 1$ and R is a hydrocarbon group selected from the group consisting of an alkyl group having 1 to 4 carbon atoms, an aryl group having 6 to 12 carbon atoms, an alkylaryl group having 7 to 20 carbon atoms, an arylalkyl group having 7 to 20 carbon atoms and an alkenyl group having 2 to 20 carbon atoms.

**13.** The method according to claim 11, wherein the metallocene catalyst (C) is formed by using at least one compound represented by the following formula (6):

$$L_jW_kMX_pX'_q \quad (6)$$

(wherein L is each independently a η-bonding cyclic anion ligand selected from the group consisting of a cyclopentadienyl group, an indenyl group, a tetrahydroindenyl group, a fluorenyl group, a tetrahydrofluorenyl group and an octahydrofluorenyl group, the ligand optionally having 1 to 8 substituents, the substituents each independently being a substituent having 1 to 20 non-hydrogen atoms selected from the group consisting of a hydrocarbon group having 1 to 20 carbon atoms, a halogen atom, a halogen-substituted hydrocarbon group having 1 to 12 carbon atoms, an aminohydrocarbyl group having 1 to 12 carbon atoms, a hydrocarbyloxy group having 1 to 12 carbon atoms, a dihydrocarbylamino group having 1 to 12 carbon atoms, a hydrocarbylphosphino group having 1 to 12 carbon atoms, a silyl group, an aminosilyl group, a hydrocarbyloxysilyl group having 1 to 12 carbon atoms and a halosilyl group,

M is a transition metal selected from transition metals belonging to Group 4 in the periodic table having a formal oxidation number of +2, +3 or +4, which is $\eta^5$-bonded to at least one ligand L,

W is a divalent substituent having 1 to 50 non-hydrogen atoms, monovalently bonded to L and M each, thereby forming a metallacycle jointly with L and M,

X is each independently an anionic σ-bonding ligand having 1 to 60 non-hydrogen atoms selected from the group consisting of a monovalent anionic σ-bonding ligand, a divalent anionic σ-bonding ligand divalently bonded to M and a divalent anionic σ-bonding ligand monovalently bonded to L and M each,

X' is each independently a neutral Lewis base coordination compound having 1 to 40 non-hydrogen atoms,

j is 1 or 2, with the proviso that when j is 2, two ligands L are optionally bonded to each other via a divalent group having 1 to 20 non-hydrogen atoms, the divalent group being selected from the group consisting of a hydrocarbadiyl group having 1 to 20 carbon atoms, a halohydrocarbadiyl group having 1 to 12 carbon atoms, a hydrocarbyleneoxy group having 1 to 12 carbon atoms, a hydrocarbyleneamino group having 1 to 12 carbon atoms, a silanediyl group, a halosilanediyl group and a silyleneamino group,

k is 0 or 1,

p is 0, 1 or 2, with the proviso that when X is a monovalent anionic σ-bonding ligand or a divalent anionic σ-bonding ligand bonded to L and M, p is an integer smaller by at least 1 than the formal oxidation number of M, and when X is a divalent anionic σ-bonding ligand bonded only to M, p is an integer smaller by at least (j+1) than the formal oxidation number of M, and

q is 0, 1 or 2).

**14.** The method according to any one of claims 11 to 13, wherein the metallocene catalyst (C) is formed by using at least one compound represented by the following formula (7):

$$[L\text{-}H]^{d+}[M_mQ_p]^{d-} \qquad (7)$$

(wherein $[L\text{-}H]^{d+}$ represents proton-donating Broeusted acid in which L is a neutral Lewis base and d is an integer of 1 to 7; $[M_mQ_p]^{d-}$ is a compatible non-coordination anion in which M is a metal belonging to Group 5 to Group 15 in the periodic table or a metalloid, Q is each independently selected from the group consisting of hydride, halide, a dihydrocarbylamide group having 2 to 20 carbon atoms, a hydrocarbyloxy group having 1 to 30 carbon atoms, a hydrocarbon group having 1 to 30 carbon atoms and a substituted hydrocarbon group having 1 to 40 carbon atoms, with the proviso that, of Qs independently selected in the formula (7), the number of Q which is a halide is 0 or 1, m is an integer of 1 to 7, p is an integer of 2 to 14, d is as defined above and p-m = d).

**15.** The method according to claim 11, wherein the compound having hydrogenation ability (D) is a titanocene compound alone, a half-titanocene compound alone, or a reaction mixture of at least one organometallic compound selected from the group consisting of organolithium, organomagnesium and organoaluminum and a titanocene compound or a half-titanocene compound.

**16.** The method according to claim 15, wherein the titanocene compound or the half-titanocene compound is at least one compound represented by the following formula (8):

$$L_jW_kTiX_pX'_q \qquad (8)$$

(wherein L is each independently a η-bonding cyclic anion ligand selected from the group consisting of a cyclopentadienyl group, an indenyl group, a tetrahydroindenyl group, a fluorenyl group, a tetrahydrofluorenyl group and an octahydrofluorenyl group, the ligand optionally having 1 to 8 substituents, the substituents each

independently being a substituent having 1 to 20 non-hydrogen atoms selected from the group consisting of a hydrocarbon group having 1 to 20 carbon atoms, a halogen atom, a halogen-substituted hydrocarbon group having 1 to 12 carbon atoms, an aminohydrocarbyl group having 1 to 12 carbon atoms, a hydrocarbyloxy group having 1 to 12 carbon atoms, a dihydrocarbylamino group having 1 to 12 carbon atoms, a hydrocarbylphosphino group having 1 to 12 carbon atoms, a silyl group, an aminosilyl group, a hydrocarbyloxysilyl group having 1 to 12 carbon atoms and a halosilyl group,
Ti is titanium having a formal oxidation number of +2, +3 or +4 and $\eta^5$-bonded to at least one ligand L
W is a divalent substituent having 1 to 50 non-hydrogen atoms, monovalently bonded to L and Ti each, thereby forming a metallacycle jointly with L and Ti,
X and X' are each independently a ligand selected from the group consisting of a monovalent ligand, a divalent ligand divalently bonded to Ti and a divalent ligand monovalently bonded to L and Ti each, which have 1 to 20 non-hydrogen atoms and are selected from the group consisting of a hydrogen atom, a hydrocarbon group having 1 to 20 carbon atoms, a halogen atom, a halogen-substituted hydrocarbon group having 1 to 12 carbon atoms, an aminohydrocarbyl group having 1 to 12 carbon atoms, a hydrocarbyloxy group having 1 to 12 carbon atoms, a dihydrocarbylamino group having 1 to 12 carbon atoms, a hydrocarbylphosphino group having 1 to 12 carbon atoms, a silyl group, an aminosilyl group, a hydrocarbyloxysilyl group having 1 to 12 carbon atoms and a halosilyl group,
j is 1 or 2, with the proviso that when j is 2, two ligands L are optionally bonded to each other via a divalent group having 1 to 20 non-hydrogen atoms, the divalent group being selected from the group consisting of a hydrocarbadiyl group having 1 to 20 carbon atoms, a halohydrocarbadiyl group having 1 to 12 carbon atoms, a hydrocarbyleneoxy group having 1 to 12 carbon atoms, a hydrocarbyleneamino group having 1 to 12 carbon atoms, a silanediyl group, a halosilanediyl group and a silyleneamino group,
k is 0 or 1,
p is 0, 1 or 2, with the proviso that when X is a monovalent ligand or a divalent ligand bonded to L and Ti, p is an integer smaller by at least 1 than the formal oxidation number of Ti, and when X is a divalent anionic σ-bonding ligand bonded only to Ti, p is an integer smaller by at least (j+1) than the formal oxidation number of Ti, and
q is 0, 1 or 2).

**17.** A molded article obtained from an ultrahigh molecular weight ethylene polymer according to any one of claims 1 to 10.

**18.** A fiber obtained from an ultrahigh molecular weight ethylene polymer according to any one of claims 1 to 10.

**INTERNATIONAL SEARCH REPORT**

International application No. PCT/JP2004/003009

A. CLASSIFICATION OF SUBJECT MATTER
Int.Cl[7] C08F10/02, C08F4/606

According to International Patent Classification (IPC) or to both national classification and IPC

B. FIELDS SEARCHED

Minimum documentation searched (classification system followed by classification symbols)
Int.Cl[7] C08F4/60-4/70, C08F10/00-10/14, C08F110/00-110/14, C08F210/00-210/18

Documentation searched other than minimum documentation to the extent that such documents are included in the fields searched

| | | | |
|---|---|---|---|
| Jitsuyo Shinan Koho | 1926-1996 | Jitsuyo Shinan Toroku Koho | 1996-2004 |
| Kokai Jitsuyo Shinan Koho | 1971-2004 | Toroku Jitsuyo Shinan Koho | 1994-2004 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 11-236410 A (Japan Polyolefins Co., Ltd.), 31 August, 1999 (31.08.99), Claims; Par. Nos. [0002], [0045]; examples (Family: none) | 1-10,17,18 |
| X | JP 7-503265 A (DSM N.V.), 06 April, 1995 (06.04.95), Claims; examples & EP 624168 A1 & TW 272199 A & US 5773547 A & WO 93/15118 A1 | 1-6,17,18 |
| A | JP 9-291112 A (Tosoh Corp.), 11 November, 1997 (11.11.97), Full description (Family: none) | 1-18 |

[X] Further documents are listed in the continuation of Box C. [ ] See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>07 April, 2004 (07.04.04) | Date of mailing of the international search report<br>27 April, 2004 (27.04.04) |
| Name and mailing address of the ISA/<br>Japanese Patent Office | Authorized officer |
| Facsimile No. | Telephone No. |

Form PCT/ISA/210 (second sheet) (January 2004)

**INTERNATIONAL SEARCH REPORT**

International application No.
PCT/JP2004/003009

C (Continuation). DOCUMENTS CONSIDERED TO BE RELEVANT

| Category* | Citation of document, with indication, where appropriate, of the relevant passages | Relevant to claim No. |
|---|---|---|
| A | JP 9-309926 A (The Dow Chemical Co.), 02 December, 1997 (02.12.97), Full description<br>& AU 9731319 A & BR 9710969 A<br>& CN 1225101 A & EP 898586 A1<br>& KR 2000011110 A & TW 440568 A<br>& US 2003/055176 A1 & WO 97/43323 A1<br>& JP 2001-512497 A | 1-18 |
| A | JP 2000-198804 A (Asahi Chemical Industry Co., Ltd.), 18 July, 2000 (18.07.00), Full description<br>& CN 1327453 A & EP 1336624 A1<br>& KR 2001093203 A & WO 2001/29094 A1 | 11-16 |
| A | JP 7-118324 A (Mitsubishi Chemical Corp.), 09 May, 1995 (09.05.95), Claims<br>(Family: none) | 1 |

Form PCT/ISA/210 (continuation of second sheet) (January 2004)